(19) Europäisches Patentamt
European Patent Office
Office européen des brevets

(11) EP 2 479 588 B1

(12) # EUROPEAN PATENT SPECIFICATION

(45) Date of publication and mention of the grant of the patent:
**16.01.2019 Bulletin 2019/03**

(51) Int Cl.:
***G01S 19/44*** *(2010.01)* ***G01S 19/51*** *(2010.01)*

(21) Application number: **12152354.2**

(22) Date of filing: **24.01.2012**

(54) **Method and apparatus for determining the relative position between two receivers of a satellite navigation system**

Verfahren und Vorrichtung zur Bestimmung der relativen Position zwischen zwei Empfängern eines Satellitennavigationssystems

Procédé et appareil permettant de déterminer la position relative entre deux récepteurs d'un système de navigation satellite

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.01.2011 EP 11151920**

(43) Date of publication of application:
**25.07.2012 Bulletin 2012/30**

(73) Proprietors:
- **Henkel, Patrick**
  **82275 Emmering (DE)**
- **Jurkowski, Patryk**
  **92245 Kümmersbruck (DE)**

(72) Inventors:
- **Henkel, Patrick**
  **82275 Emmering (DE)**
- **Jurkowski, Patryk**
  **92245 Kümmersbruck (DE)**

(56) References cited:
**WO-A2-2010/021656 US-A1- 2004 225 438**

- **TEUNISSEN P J G: "Integer least-squares theory for the GNSS compass", JOURNAL OF GEODESY ; CONTINUATION OF BULLETIN GÉODÉSIQUE AND MANUSCRIPTA GEODAETICA, SPRINGER, BERLIN, DE, vol. 84, no. 7, 2 April 2010 (2010-04-02), pages 433-447, XP019838063, ISSN: 1432-1394**
- **JURKOWSKI P ET AL: "Integer Ambiguity Resolution with Tight and Soft Baseline Constraints for Freight Stabilization at Helicopters and Cranes", ITM 2011 - PROCEEDINGS OF THE 2011 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 26 January 2011 (2011-01-26), pages 336-346, XP056000052,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 479 588 B1

Printed by Jouve, 75001 PARIS (FR)

**Description**

The invention relates to a method and apparatus for determining the relative position between two receivers of a satellite navigation system, in which the receivers perform phase measurements on carrier signals of the satellite navigation system, and in which an evaluation unit uses the phase measurements for determining the relative position of the receivers.

Carrier phase measurements are extremely accurate but ambiguous. Teunissen in [1] developed the Least-squares Ambiguity Decorrelation Adjustment (LAMBDA) method in order to solve the unconstrained integer least-squares estimation. Teunissen introduced an integer ambiguity transformation based on an alternating sequence of permutations and integer decorrelations to obtain a sphere-like and largely decorrelated search space.

The reliability of the resolution of the ambiguity of phase measurements is often not sufficient due to the the small carrier wavelength of 19 cm and multipath. Various approaches are known for improving the reliability of integer least-squares estimation:

In one approach, Mönikes et al. introduced position domain constraints in the integer search in [2].

In another approach, Teunissen provided a rigorous theory for integer least-squares estimation with a hard constraint on the baseline length in [3]. He extended his theory to a soft Gaussian constraint on the baseline length in [4].

In a further approach, multi-frequency widelane combinations were used that increase the wavelength to several meters. In [5]-[7], Henkel et al. proposed a class of multi-frequency code carrier linear combinations that maximize the ambiguity discrimination. It was introduced as the ratio between the wavelength and the doubled standard deviation of the combination noise to further improve the reliability of integer ambiguity resolution.

US 2004/0225438 A1 discloses a method for Bayesian estimation of phase ambiguities.

Proceeding from this related art, the present invention seeks to provide an improved method and apparatus for determining the relative position between two receivers of a satellite navigation system

This object is achieved by a method having the features of the independent claim. Advantageous embodiments and refinements are specified in claims dependent thereon.

In a first step of the method, position parameters of the relative position are determined by searching candidate phase ambiguities. In a second step, for each candidate phase ambiguity associated position parameters of the relative position are determined, which are maximizing an a-posteriori-probability for the position parameters under the condition of the phase measurement. In a third step, final integer candidate phase ambiguity and the position parameters associated with the final integer candidate phase ambiguity are selected by evaluating a final cost function, which is arranged for evaluating the deviation of the candidate integer phase ambiguity and position parameters from estimates of the integer phase ambiguities and the position parameters.

This approach allows to include constraints on the baseline orientation. This is a non-trivial extension as the angles describing the baseline direction enter the cost function in a highly nonlinear form. However, soft constraints on the direction can be helpful to reduce the size of the search space and, thereby, to improve the reliability of ambiguity resolution.

In one embodiment, the candidate phase ambiguities are determined by using a search tree, whose branches represent different combinations of phase candidate ambiguities, and wherein branches comprising a phase ambiguity associated with a position parameter beyond probability limits are excluded. By using such approach, a systematic search can be performed and the number of candidate ambiguities can be significantly reduced.

The probability limits used in searching the branches of the search tree can be adjustable by a predetermined factor, so that the search can be adjusted to the conditions of the search.

The a-posteriori-probability generally contains the probability distributions of the phase measurements under the condition of given position parameters, the probability distribution of the position parameters and the probability of the phase measurements. Using the rule of Bayes the probability distribution of the position parameters under the condition of the phase measurement can be composed by known probability distributions. The probability distribution of the position parameters under the condition of the phase measurement can in particular expressed as the product of the probability distribution of the phase measurements under the condition of given position parameters, the probability distribution of the position parameters and the probability of the phase measurements.

The used probability distributions are Gaussian probability distributions if an a priori knowledge on a particular positional parameter is available or uniform distributions can be used if this information is unavailable or erroneous.

The a-posteriori-probability is generally maximized by minimizing an intermediate cost function containing a norm for the deviation of the phase measurement values associated with the position parameters and the candidate phase ambiguity from actual phase measurements and further containing the sum of the squares of deviations of the position parameters from expectation values of the position parameters. Using such an intermediate cost function reduces the computational burden.

The intermediate cost function can be minimized by determining the position of zero transition of a gradient of the sum by a Newton method. The gradient is determined by differentiating the intermediate cost function with respect to the position parameters.

For increasing the accuracy of the estimation of the position parameters associated with a particular candidate integer ambiguity, the intermediate cost function contains measurements form different epochs.

The final cost function used for determining the final integer candidate phase ambiguity and the position parameters associated with the final integer candidate phase ambiguity contains a norm for the deviation of the integer candidate phase ambiguity from an estimated float phase ambiguity and a further norm for the deviation of a distance vector associated with the integer candidate phase ambiguity from an estimated distance vector.

Besides the phase measurements also code measurements can be used for performing the search for candidate phase ambiguities and for determining the position parameters, thus increasing the speed of the phase ambiguity resolution.

For facilitate the phase ambiguity resolution, a linear combination of phase measurements is used and the common phase ambiguities of the linear combination is determined. In particular by using widelane combinations and by determining the phase ambiguity of the widelane combinations the reliability of the phase ambiguity resolution can be considerably increased.

The position parameters can be the length of the distance and can be further direction parameters for determining a direction of a baseline extending between the two receivers. The position parameters can also be the length of the distance, the pitch angle and the heading. The position parameters can further be the length of the distance, the pitch angle, the heading, the change rate of the pitch angle and the change rate of the heading. Considering the change rates can be particularly useful if a state space model is used for determining the actual state and the change rate.

The reliability of the estimated position parameters is increased if at least one sensor is used which determines at least one position parameter.

The method can be performed by an apparatus for determining the relative position between two components comprising at least two receivers arrangable at a distance and capable of performing phase and code measurements on signals, which the receivers receive from satellites of a satellite navigation system. The apparatus further comprises an evaluation unit arranged for determining the relative position between the receivers.

One particluar application is an apparatus in which one of the receivers is located on a freight and the other receiver is located on a device holding the freight and in which the position parameters determined by executing the method described herein are used as an actual value for a control unit for stabilizing the freight.

Further advantages and properties of the present invention are disclosed in the following description, in which exemplary embodiments of the present invention are explained in detail based on the drawings:

Figure 1 illustrates the use of differential carrier phase positioning for freight stabilization under helicopters;

Figure 2 shows an iInteger ambiguity grid, in which the search space volume of the float solution is substantially reduced by constraints on the baseline length and direction;

Figure 3 is a flow diagramm of a method for tight and soft constrained integer ambiguity resolution, in which a priori information is used for both the search and the baseline estimation;

Figure 4 is a diagram allowing demonstrating the benefit of, soft constrained and tightly constrained ambiguity resolution;

Figure 5 is diagram showing constrained estimations of the baseline length;

Figure 6 is further diagram showing constrained estimations of the baseline length;

Figure 7 illustrates the use of differential carrier phase posistioning for the navigation of vehicles such as ships;

Figure 8 is a flow diagramm of a method, in which a state space model is used for determning positional parameters;

Figure 9 shows a coordinate systems, in which the baseline vector in ECEF coordinates is obtained from the baseline in local coordinates by a rotation;

Figure 10 shows the convergence of the constrained aposteriori float ambiguity estimates in a scenario without apriori knowledge on the pitch angle;

Figure 11 shows the convergence of the constrained aposteriori sperical baseline estimates of the positional parameters of the baseline in a scenario without apriori knowledge on the pitch angle;

Figure 12 shows the convergence of the constrained aposteriori float ambiguity estimates in a scenario with apriori knowledge on the pitch angle;

Figure 13 shows the convergence of the constrained aposteriori sperical baseline estimates of the positional parameters of the baseline in a scenario with apriori knowledge on the pitch angle;

Figure 14 illustrates the benefit of the inequality constrains for float ambiguity estimation as a function of the tightness of the bounds;

Figure 15 illustrates a search tree used in a search for integer ambiguity candidates;

Figure 16 illustrates the benefit of length constraints in the search for integer ambiguits candidates;

Figure 17 is a diagram showing test results, in particular estimates of float widelane ambiguities on a single epoch basis.; and

Figure 18 is a diagram showin test results, in particular range residuals after widelane ambiguity resolution.

Differential carrier phase positioning is used in a wide range of applications including real time kinematic (= RTK) services, assistance systems for cars, attitude determination of aircrafts, navigation of robots, and freight stabilization under helicopters.

Figure 1 shows a helicopter 1 that deposits a load 2, namely beams near human workers 3 on a construction site 4. The pilot of helicopter 1 may not be able to see the load 2, which may result in dangerous situations for both the pilot and the ground staff. Using a Global Navigation Satellite System (=GNSS) receiver 5 onboard the helicopter and a second receiver 6 on the carried load 2 allows a determination of the relative position. It can then be used for stabilizing the load 2 by an assistance system.

The receivers 5 and 6 define a baseline 7, whose length and orientaton can be determined by means of the receivers 5 and 6. The length of the baseline 7 essentially corresponds to the length of a rope 8. The length of the rope 8 is known (up to its extension due to the weight of the load), and its orientation is constrained by gravity and the energy accumulated in the maneuver. Since the length and direction are not perfectly known in many applications, a certain variation must be allowed.

The use of phase measurements on the carrier signals of the GNSS allows millimeter accuracy but introduces integer ambiguities due to the periodicity of the phase. A reliable resolution of these integer ambiguities can now be achieved by including a priori knowledge on the baseline into the ambiguity resolution:
Figure 2 illustrates the constrained integer least-squares estimation for differential carrier phase positioning: For determining the relative position of the receiver 6 with respect to the receiver 5, phase measurements on carrier signals 9, 10, and 11 are performed. The carrier signals 9, 10 and 11 are emitted from satellites 12 and have wavefronts 13, 14 and 15. These wavefronts 13, 14 and 15 intersect in numerous points 16. Any point 16 in which the three wavefronts 13, 14 and 15 intersect qualifies as a candidate for the the acutal position of the receiver 6. The phase measurements are now affected by ambiguity since individual wavesfront 13, 14, and 15 cannot be distinguished. Therefore the ambiguity must be resolved.

For finding the actual position of the receiver 6, the search space can be restricted by a pure code solution, which results from measurements on the code signals modulated on the carrier signals 9, 10 and 11. The pure code solution provides a rough estimate of the receiver position, which leads to a certain search space volume 17 (shown as circle) but the latter one is not yet accurate enough to find the correct ambiguity.

The introduction of Gaussian a priori knowledge on the length and pitch angle of the baseline 7, which may be located within a motion space 18, substantially reduces the search space 17, to an intersection 19 of the motion space 18 with the search space 17, but still allows some uncertainty in the a priori knowledge. Taking into account a priori information on both the baseline length and an orientation or attitude of the baseline in a statistical manner has the advantage that it gives a preference to a certain direction but also allows some variations.

In the following a maximum a posteriori probability estimator of the baseline length and direction is used with soft a priori information on both parameters. This estimator can be applied either to double difference measurements or to multi-frequency linear combinations of double difference measurements.

The soft constrained baseline and ambiguity estimation is described for the two most common probability distributions: the Gaussian distribution and the uniform distribution. In both cases, the estimation can be efficiently performed with the iterative Gauss-Newton method. For Gaussian distributed a priori information, the estimator is even an optimum of a Maximum A Posteriori Probability (MAP) estimator.

The proposed method can be used in any application, where GNSS satellites can be received and where there is a need for an accurate attitude information. For example, it can be used in automobiles for an assistance system for side-slip detection or for a parking aid. It can also be used in maritime navigation as an assistance system for navigating into narrow watergates or for landing in harbours. Moreover, it might be used in aviation, e.g. as an assistance system for attitude determination or for the stabilization of freight carried by helicopters.

**1. Relative Carrier Phase Positioning Using Cartesian Coordinates**

Precise relative positioning is commonly done with double difference carrier phase measurements as they eliminate both receiver and satellite clock offsets and atmospheric delays. For attitude determination, a common model for the double difference phase measurements of multiple baselines is

$$\mathbf{z}_n = \mathbf{H}_n \xi_n + \mathbf{AN} + \varepsilon_n = \mathbf{H}_n \mathbf{R}_n \xi'_n + \mathbf{AN} + \varepsilon_n, \qquad (1)$$

where $\mathbf{H}_n$ is the differential geometry matrix, $\mathbf{R}_n$ is the unknown rotation matrix, $\xi'_n$ is the known baseline in a local coordinate frame, **A** is a pre-factor matrix for the double difference ambiguities **N,** and $\varepsilon_n$ describes the phase noise. The definition of the rotation matrix $\mathbf{R}_n$ and baseline $\xi'_n$ is depending on the number of used baselines. For a single baseline application, $\mathbf{R}_n$ and $\xi'_n$ are defined as

$$\mathbf{R}_n = \begin{bmatrix} r_1^1 \\ r_2^1 \\ r_3^1 \end{bmatrix} \quad \text{and} \quad \xi'_n = l_n. \qquad (2)$$

The three unknowns $\{r_1^1 \ldots r_3^1\}$ are related to each other by the normality constraint of $\mathbf{R}_n$, which means that there are only two independent unknowns to be estimated. For a setting with two baselines, $\mathbf{R}_n$ and $\xi'_n$ are given by

$$\mathbf{R}_n = \begin{bmatrix} r_1^1 & r_1^2 \\ r_2^1 & r_2^2 \\ r_3^1 & r_3^2 \end{bmatrix} \quad \text{and} \quad \xi'_n = \begin{bmatrix} f_{11} & f_{12} \\ 0 & f_{22} \end{bmatrix}. \qquad (3)$$

There are six unknowns and three orthonormality constraints in this scenario which means that there are only three independent unknowns. For an application with three and more baselines, $\mathbf{R}_n$ and $\xi'_n$ are modeled as

$$\mathbf{R}_n = \begin{bmatrix} r_1^1 & r_1^2 & r_1^3 \\ r_2^1 & r_2^2 & r_2^3 \\ r_3^1 & r_3^2 & r_3^3 \end{bmatrix} \quad \text{and} \quad \xi'_n = \begin{bmatrix} f_{11} & f_{12} & f_{13} & & f_{1a} \\ 0 & f_{22} & f_{23} & \cdots & f_{2a} \\ 0 & 0 & f_{33} & & f_{3a} \end{bmatrix}. \qquad (4)$$

Obviously, there are nine unknowns and six independent orthonormality constraints in this scenario which means that there are three independent unknowns. Note that the number of unknowns and independent constraints is not growing by using more than three baselines. The properties of the *vec* operator can now be used to rewrite (1) in a form, where the unknown quantities appear only as a vector at the end of each addend, i.e.

$$vec(\mathbf{z}_n) = \underbrace{[\mathbf{I}_a \otimes \mathbf{A}]}_{\mathbf{A'}} vec(\mathbf{N}) + \underbrace{[(\xi')^T \otimes \mathbf{H}_n]}_{\mathbf{H'}n} vec(\mathbf{R}_n) + vec(\varepsilon_n), \qquad (5)$$

where $\mathbf{I}_a$ is the quadratic identity matrix with *a* rows and columns. An orthogonal projection on the space of **A'** is now applied for the least-squares estimation of $vec(\mathbf{R}_n)$, i.e.

$$\mathbf{P}_{\mathbf{A'}}^{\perp} vec(\mathbf{z}_n) = \mathbf{P}_{\mathbf{A'}}^{\perp} \mathbf{H}'_n vec(\mathbf{R}_n) + \mathbf{P}_{\mathbf{A'}}^{\perp} vec(\varepsilon_n), \quad (6)$$

where $\mathbf{P}_{\mathbf{A'}}^{\perp}$ is the orthogonal projector on the space of **A'.** If the orthonormality property of $\mathbf{R}_n$ is ignored, a least-squares estimation is easily obtained as

$$vec(\mathbf{R}_n) = \left(\bar{\mathbf{H}}^T \mathbf{\Sigma}_n^{-1} \bar{\mathbf{H}}_n\right)^{-1} \bar{\mathbf{H}}^T \mathbf{\Sigma}_n^{-1} vec(\mathbf{z}_n) \quad \text{with} \quad \bar{\mathbf{H}}_n = \mathbf{P}_{\mathbf{A'}}^{\perp}\left[(\xi'_n)^T \otimes \mathbf{H}_n\right]. \quad (7)$$

Once the unconstrained solution $\hat{\mathbf{R}}_n$ is computed, an orthonormal matrix $\breve{\mathbf{R}}_n$ is determined from

$$\breve{\mathbf{R}}_n = \operatorname{argmin}_{\mathbf{R}_n \in O^{3\times p}} \mathrm{P} vec(\hat{\mathbf{R}}_n - \mathbf{R}_n) \mathrm{P}^2_{\mathbf{Q}^{-1}_{\hat{\mathbf{R}}_n}}, \quad (8)$$

which can also be considered as a Lagrange optimization:

$$\breve{\mathbf{R}}_n = \arg\min_{\mathbf{R}_n} \left( \mathrm{P} vec(\hat{\mathbf{R}}_n - \mathbf{R}_n) \mathrm{P}^2_{\mathbf{Q}^{-1}_{\hat{\mathbf{R}}_n}} + tr\left(\mathbf{\Lambda}(\mathbf{R}_n{}^T \mathbf{R}_n - \mathbf{1}_3\right) \right) \quad (9)$$

with

$$\mathbf{\Lambda} = \begin{bmatrix} \lambda_1 & \frac{1}{2}\lambda_4 & \frac{1}{2}\lambda_5 \\ \frac{1}{2}\lambda_4 & \lambda_2 & \frac{1}{2}\lambda_6 \\ \frac{1}{2}\lambda_5 & \frac{1}{2}\lambda_6 & \lambda_3 \end{bmatrix}. \quad (10)$$

**2. Problems of Relative Carrier Phase Positioning Using Cartesian Coordinates**

The previously described method for relative carrier phase positioning and attitude determination has the disadvantage that there is no way to efficiently include statistical a priori information about the attitude into the ambiguity fixing. To illustrate this, we extend the measurement vector by some a priori knowledge about the attitude, i.e. by an a priori known rotation matrix $\bar{\mathbf{R}}_n$ and obtain

$$\begin{bmatrix} vec(\mathbf{z}_n) \\ vec(\bar{\mathbf{R}}_n) \end{bmatrix} = \underbrace{\begin{bmatrix} \mathbf{I}_a \otimes \mathbf{A} \\ \mathbf{0} \end{bmatrix}}_{\mathbf{A'}} vec(\mathbf{N}) + \underbrace{\begin{bmatrix} (\xi')^T \otimes \mathbf{H} \\ \mathbf{1} \end{bmatrix}}_{\mathbf{H}'_n} vec(\mathbf{R}_n) + vec(\varepsilon_n). \quad (11)$$

As shown in Figure 7, the baseline vector in Earth Centered Earth Fixed (ECEF) coordinates then follows from a simple rotation of the known baseline vector $\xi'_n$ in local coordinates, i.e.

$$\bar{\xi}_n = \bar{\mathbf{R}}_n \xi'_n. \quad (12)$$

However, in practice the a priori knowledge is parameterized in spherical coordinates by the pitch angle $\bar{v}_{1,n}$, the heading $\bar{v}_{2,n}$ and the baseline length $\bar{l}_n$. These spherical baseline parameters can also be transformed into the baseline vector $\bar{\xi}_n$ in Earth Centered Earth Fixed (ECEF) coordinates by the relationship

$$\bar{\xi}_n = \mathbf{R}_{\substack{ENU\\ECEF}} \begin{bmatrix} \bar{l}\cos(\bar{v}_{1,n})\cos(\bar{v}_{2,n}) \\ \bar{l}\cos(\bar{v}_{1,n})\cos(\bar{v}_{2,n}) \\ \bar{l}\sin(\bar{v}_{1,n}) \end{bmatrix}, \tag{13}$$

where $\mathbf{R}_{\substack{ENU\\ECEF}}$ is the known transformation from the local East, North and Up (ENU) to the ECEF coordinates.

Equating equations (12) and (13) enables us to transform the rotation matrix $\bar{\mathbf{R}}_n$ into the pitch angle $\bar{v}_{1,n}$, the heading $\bar{v}_{2,n}$ and the baseline length $l_n$, and vice versa. However, there is no way to transform the statistics of $\bar{v}_{1,n}$, $\bar{v}_{2,n}$ and $l_n$ efficiently into the statistics of $\bar{\mathbf{R}}_n$ as the transformation includes several trigonometric functions.

Therefore, there is a new approach for attitude determination required, which parameterizes the baseline in spherical coordinates and enables the inclusion of statistical baseline and attitude a priori knowledge into the ambiguity fixing.

### 3. Constrained Baseline and Ambiguity Resolution using A Priori Knowledge on Attitude

#### 3.1 Measurement Model

The double difference carrier phase measurements on frequency $\phi_m$ of satellite $k$ are modeled in the following by

$$\begin{aligned} \lambda_m \nabla\Delta\phi_m^k &= \nabla\Delta r^k + \lambda_m \nabla\Delta N_m^k \\ &-q_{1m}^2 \nabla\Delta I^k + \nabla\Delta T^k + \nabla\Delta\eta_{\phi_m}^k, \end{aligned} \tag{14}$$

with the double difference range $\nabla\Delta r^k$, the double difference integer ambiguity $\nabla\Delta N_m^k$, the double difference ionospheric and tropospheric delays $\nabla\Delta I^k$ and $\nabla\Delta T^k$, the ratio of frequencies $q_{1m} = f_1/f_m$, and the double difference measurement noise $\nabla\Delta\eta_{\phi_m}^k$. Obviously, the double difference atmospheric delays can be neglected for short baselines as considered herein. A similar model is used for the double difference code measurements, i.e.

$$\nabla\Delta\rho_m^k = \nabla\Delta r^k + q_{1m}^2 \nabla\Delta I^k + \nabla\Delta T^k + \nabla\Delta\eta_{\rho_m}^k. \tag{15}$$

Two multi-frequency linear combinations are applied to the double difference carrier phase measurements $\lambda_m\nabla\Delta\phi_m$ and code measurements $\nabla\Delta\rho_m$ : a code carrier linear combination and a code-only combination, i.e.

$$\boldsymbol{\Psi} = \begin{bmatrix} \sum_{m=1}^{M}(\alpha_m\lambda_m\nabla\Delta\phi_m + \beta_m\nabla\Delta\rho_m) \\ \sum_{m=1}^{M}(\beta_m^{'}\nabla\Delta\rho_m) \end{bmatrix}, \tag{16}$$

where $\alpha_m$ denote the weighting coefficients of the phase measurements, and $\beta_m$ and $\beta_m^{'}$ represent the code coefficients on frequency $m \in \{1,...,M\}$. These coefficients were optimized by Henkel et al. in [5]-[7]. The combined measurements

$\Psi$ are modeled by

$$\Psi = \mathbf{H}\xi + \mathbf{AN} + \mathbf{b} + \varepsilon, \qquad (17)$$

where **H** describes the differential geometry given by

$$\mathbf{H} = \begin{bmatrix} (\mathbf{e}^1)^T - (\mathbf{e}^K)^T \\ \vdots \\ (\mathbf{e}^{K-1})^T - (\mathbf{e}^K)^T \end{bmatrix}, \qquad (18)$$

with the unit vector $\mathbf{e}^k$ pointing from the $k$ -th satellite to the receiver, and $\xi$ being the baseline between both receivers. It can be represented in spherical coordinates by the elevation $v_1$, the azimuth $v_2$ and the length $l$, i.e.

$$\xi = \mathbf{r}(\nu_1, \nu_2) \cdot l, \qquad (19)$$

with

$$\mathbf{r}(\nu_1, \nu_2) = \begin{bmatrix} \cos(\nu_1)\cos(\nu_2) \\ \cos(\nu_1)\sin(\nu_2) \\ \sin(\nu_1) \end{bmatrix}. \qquad (20)$$

The second term in equation (17) represents the combined integer ambiguities **N** with the combination wavelength included in pre-factor matrix **A** :

$$\mathbf{A} = \begin{bmatrix} \lambda \cdot \mathbf{I} \\ \mathbf{0} \end{bmatrix}. \qquad (21)$$

The unknown biases **b** describe multipath with long decorrelation time, and are introduced to test the robustness of the constrained ambiguity resolution. The measurement noise $\varepsilon$ : N(**0**,$\Sigma$) is assumed to be white Gaussian noise.

### 3.2 Unconstrained Ambiguity Resolution

The estimation of integer ambiguities and baselines is in general performed such that the weighted squared norm of range residuals is minimized. Teunissen decomposed this squared norm into three terms in [1]:

$$\min_{\xi,\mathbf{N}} \| \mathbf{\Psi} - \mathbf{H}\xi - \mathbf{AN} \|^2_{\mathbf{\Sigma}^{-1}}$$

$$= \min_{\mathbf{N}} \left( \| \hat{\mathbf{N}} - \mathbf{N} \|^2_{\mathbf{\Sigma}^{-1}_{\hat{\mathbf{N}}}} + \min_{\xi} \| \breve{\xi}(\mathbf{N}) - \xi \|^2_{\mathbf{\Sigma}^{-1}_{\breve{\xi}(\mathbf{N})}} \right)$$

$$+ \| \mathbf{P}^{\perp}_{\bar{\mathbf{A}}} \mathbf{P}^{\perp}_{\mathbf{H}} \mathbf{\Psi} \|^2_{\mathbf{\Sigma}^{-1}}, \qquad (22)$$

where $\hat{\mathbf{N}}$ denotes the float ambiguity estimates, $\breve{\xi}(\mathbf{N})$ is the fixed baseline estimate, and $\mathbf{P}^{\perp}_{\mathbf{H}}$, $\mathbf{P}^{\perp}_{\bar{\mathbf{A}}}$ are orthogonal

projections defined as

$$\mathbf{P}_{\mathbf{H}}^{\perp} = \mathbf{1} - \mathbf{P}_{\mathbf{H}} = \mathbf{1} - \mathbf{H}\left(\mathbf{H}^{T}\boldsymbol{\Sigma}^{-1}\mathbf{H}\right)^{-1}\mathbf{H}^{T}\boldsymbol{\Sigma}^{-1}$$

$$\mathbf{P}_{\bar{\mathbf{A}}}^{\perp} = \mathbf{1} - \mathbf{P}_{\bar{\mathbf{A}}} = \mathbf{1} - \bar{\mathbf{A}}\left(\bar{\mathbf{A}}^{T}\Sigma^{-1}\bar{\mathbf{A}}\right)^{-1}\bar{\mathbf{A}}^{T}\Sigma^{-1}, \quad (23)$$

with

$$\bar{\mathbf{A}} = \mathbf{P}_{H}^{\perp}\mathbf{A}. \quad (24)$$

The float ambiguity estimates $\hat{\mathbf{N}}$ are given by

$$\hat{\mathbf{N}} = \arg\min_{\mathbf{N}\in\mathrm{R}^{K\times 1}} \left\| \mathbf{P}_{\mathbf{H}}^{\perp}\left(\boldsymbol{\Psi} - \mathbf{A}\mathbf{N}\right)\right\|_{\boldsymbol{\Sigma}^{-1}}^{2} = \left(\bar{\mathbf{A}}^{T}\boldsymbol{\Sigma}^{-1}\bar{\mathbf{A}}\right)^{-1}\bar{\mathbf{A}}^{T}\boldsymbol{\Sigma}^{-1}\mathbf{P}_{H}^{\perp}\boldsymbol{\Psi}, \quad (25)$$

with covariance matrix $\Sigma_{\hat{\mathbf{N}}} = (\bar{\mathbf{A}}^{T}\Sigma^{-1}\bar{\mathbf{A}})^{-1}$. Similarly, the fixed baseline solution $\breve{\xi}(\mathbf{N})$ is given by

$$\breve{\xi}(\mathbf{N}) = \min_{\xi\in\mathrm{R}^{3\times 1}} \left\| \boldsymbol{\Psi} - \mathbf{H}\xi - \mathbf{A}\mathbf{N}\right\|_{\boldsymbol{\Sigma}^{-1}}^{2}, \quad (26)$$

with the covariance matrix $\boldsymbol{\Sigma}_{\breve{\xi}(\mathbf{N})} = (\mathbf{H}^{T}\boldsymbol{\Sigma}^{-1}\mathbf{H})^{-1}$. For unconstrained ambiguity resolution, the second term in equation (22) can be made to zero by setting $\xi$ to $\breve{\xi}(\mathbf{N})$. Consequently, optimal ambiguity resolution reduces to the minimization of the first term in equation (22). The last term describes the irreducible noise. The introduction of constraints on the length and/or direction of the baseline prevents the setting $\xi = \breve{\xi}(\mathbf{N})$ and, thus, a separate estimation of ambiguities and the baseline is no longer feasible.

### 3.3 Integer Ambiguity Resolution with Tight and Soft Constraints

The constrained ambiguity resolution is performed in four steps as shown in Figure 3. First, an determination 20 of constrained float solution $\hat{\mathbf{N}}$ is performed using equation (25). Secondly, a search 21 is performed which takes some a priori information 22 about the baseline length ($\bar{l}$) and direction ($\bar{v}_1$, $\bar{v}_2$) into account, and results in a set of candidates $\{\breve{\mathbf{N}}\}$. For each of these candidates $\breve{\mathbf{N}}$, the baseline parameters $l$, $v_1$ and $v_2$ are estimated iteratively with the Newton method by an estimation 23 of the position parameters. Finally, a selection 24 of the integer vector $\mathbf{N}$ with minimum error norm is performed. The efficiency of the search can be further improved by applying an integer decorrelation to the float ambiguities similar to the unconstrained case [1].

In the following sections the search 21 will be described in more detail.

### 3.3.1 Tight Constraints

The length of the baseline 7 is known in a variety of applications, e.g. the distance between the freight and the helicopter in Figure 1 is given by the length of the rope 8. This a priori knowledge can be considered either as a tight or as a soft constraint allowing some variations.

#### 3.3.1.1 Length Constraints

In the following, the notation shall be simplified by denoting the second term in (22) by

$$J(\nu_1,\nu_2,l,\mathbf{N}) = \|\breve{\boldsymbol{\xi}}(\mathbf{N}) - \mathbf{r}(\nu_1,\nu_2)l\|^2_{\boldsymbol{\Sigma}^{-1}_{\breve{\boldsymbol{\xi}}(\mathbf{N})}} . \tag{27}$$

The minimization of $J$ with a tight length constraint can be written as a Lagrange optimization, i.e.

$$f(\lambda,\mathbf{N}) = J(\nu_1,\nu_2,l,\mathbf{N}) + \lambda\cdot\left(\|\boldsymbol{\xi}\|^2 - l^2\right), \tag{28}$$

with Lagrange parameter $\lambda$. Setting the derivative with respect to $\xi$ equal to zero, and solving it for $\xi$ yields:

$$\breve{\boldsymbol{\xi}}_\lambda(\mathbf{N}) = \left(\boldsymbol{\Sigma}^{-1}_{\breve{\boldsymbol{\xi}}(\mathbf{N})} - \lambda\mathbf{I}\right)^{-1}\boldsymbol{\Sigma}^{-1}_{\breve{\boldsymbol{\xi}}(\mathbf{N})}\breve{\boldsymbol{\xi}}(\mathbf{N}), \tag{29}$$

which is set into the length constraint to obtain

$$g(\lambda) = \left\|\left(\boldsymbol{\Sigma}^{-1}_{\breve{\boldsymbol{\xi}}(\mathbf{N})} - \lambda\mathbf{I}\right)^{-1}\boldsymbol{\Sigma}^{-1}_{\breve{\boldsymbol{\xi}}(\mathbf{N})}\breve{\boldsymbol{\xi}}(\mathbf{N})\right\|^2 - l^2 \overset{!}{=} 0. \tag{30}$$

It can be solved iteratively for $\lambda$ with the Newton method, i.e.

$$\lambda_{n+1} = \lambda_n - \left.\frac{g(\lambda)}{g'(\lambda)}\right|_{\lambda=\lambda_n}, \tag{31}$$

with the gradient

$$g'(\lambda) = 2(\breve{\boldsymbol{\xi}}(\mathbf{N}))^T\boldsymbol{\Sigma}^{-1}_{\breve{\boldsymbol{\xi}}(\mathbf{N})}\left(\boldsymbol{\Sigma}^{-1}_{\breve{\boldsymbol{\xi}}(\mathbf{N})} - \lambda\mathbf{I}\right)^{-3}\boldsymbol{\Sigma}^{-1}_{\breve{\boldsymbol{\xi}}(\mathbf{N})}\breve{\boldsymbol{\xi}}(\mathbf{N}). \tag{32}$$

The iterative computation can be initialized with $\lambda_0 = 0$, i.e. the unconstrained ambiguity resolution.

#### 3.3.1.2 Angular Constraints

In some applications, the direction of the baseline 7 is known. Three cases shall be considered: the angle $\nu_1$ is known only, the angle $\nu_2$ is known only, and both angles are known a priori. If $\nu_1$ is known, the minimization problem is given by

$$\min_{\nu_2,l,\mathbf{N}}\left(J(\nu_1,\nu_2,l,\mathbf{N})\right). \tag{33}$$

Setting the derivatives w.r.t. $l$ and $v_2$ to zero gives

$$\frac{\partial}{\partial l}\left(J(\nu_1,\nu_2,l,\mathbf{N})\right)= -2(\breve{\xi}(\mathbf{N}))^T\boldsymbol{\Sigma}_{\breve{\xi}(\mathbf{N})}^{-1}\mathbf{r}(\nu_1,\nu_2) +2l\cdot(\mathbf{r}(\nu_1,\nu_2))^T\boldsymbol{\Sigma}_{\breve{\xi}(\mathbf{N})}^{-1}\mathbf{r}(\nu_1,\nu_2)\overset{!}{=}0, \qquad (34)$$

and

$$\frac{\partial}{\partial \nu_2}\left(J(\nu_1,\nu_2,l,\mathbf{N})\right)= -2l\cdot(\breve{\xi}(\mathbf{N}))^T\boldsymbol{\Sigma}_{\breve{\xi}(\mathbf{N})}^{-1}\frac{\partial\mathbf{r}(\nu_1,\nu_2)}{\partial\nu_2} +2l^2\cdot\left(\frac{\partial\mathbf{r}(\nu_1,\nu_2)}{\partial\nu_2}\right)^T\boldsymbol{\Sigma}_{\breve{\xi}(\mathbf{N})}^{-1}\mathbf{r}(\nu_1,\nu_2)\overset{!}{=}0. \qquad (35)$$

As equations (34) and (35) can not be solved for $l$ and $v_2$ in closed form, an iterative solution based on the Newton method can be used, i.e.

$$\breve{l}^{\,i}(\mathbf{N})=\breve{l}^{\,i-1}(\mathbf{N})-\left.\frac{\frac{\partial}{\partial l}\left(J(\nu_1,\nu_2,l,\mathbf{N})\right)}{\frac{\partial^2}{\partial^2 l}\left(J(\nu_1,\nu_2,l,\mathbf{N})\right)}\right|_{\substack{\nu_2=\breve{\nu}_2^{i-1}(\mathbf{N})\\ l=\breve{l}^{i-1}(\mathbf{N})}}, \qquad (36)$$

and

$$\breve{\nu}_2^{i}(\mathbf{N})=\breve{\nu}_2^{i-1}(\mathbf{N})-\left.\frac{\frac{\partial}{\partial \nu_2}\left(J(\nu_1,\nu_2,l,\mathbf{N})\right)}{\frac{\partial^2}{\partial^2 \nu_2}\left(J(\nu_1,\nu_2,l,\mathbf{N})\right)}\right|_{\substack{\nu_2=\breve{\nu}_2^{i-1}(\mathbf{N})\\ l=\breve{l}^{i-1}(\mathbf{N})}}, \qquad (37)$$

where the second order derivatives are given by

$$\frac{\partial^2}{\partial l^2}\left(J(\nu_1,\nu_2,l,\mathbf{N})\right)=2(\mathbf{r}(\nu_1,\nu_2))^T\boldsymbol{\Sigma}_{\breve{\xi}(\mathbf{N})}^{-1}\mathbf{r}(\nu_1,\nu_2), \qquad (38)$$

and

$$\frac{\partial^2}{\partial \nu_1^2}\left(J(\nu_1,\nu_2,l,\mathbf{N})\right) = -2l(\breve{\xi}(\mathbf{N}))^T \boldsymbol{\Sigma}_{\breve{\xi}(\mathbf{N})}^{-1} \frac{\partial^2 \mathbf{r}(\nu_1,\nu_2)}{\partial \nu_1^2}$$
$$+2l^2\left(\frac{\partial^2 \mathbf{r}(\nu_1,\nu_2)}{\partial \nu_1^2}\right)^T \boldsymbol{\Sigma}_{\breve{\xi}(\mathbf{N})}^{-1}\mathbf{r}(\nu_1,\nu_2)$$
$$+2l^2\left(\frac{\partial \mathbf{r}(\nu_1,\nu_2)}{\partial \nu_1}\right)^T \boldsymbol{\Sigma}_{\breve{\xi}(\mathbf{N})}^{-1} \frac{\partial \mathbf{r}(\nu_1,\nu_2)}{\partial \nu_1}, \qquad (39)$$

where

$$\frac{\partial^2 \mathbf{r}(\nu_1,\nu_2)}{\partial \nu_1^2} = -\mathbf{r}(\nu_1,\nu_2).$$

If $v_2$ is known instead of $v_1$, the minimization problem is given by

$$\min_{\nu_1,l,\mathbf{N}}\left(J(\nu_1,\nu_2,l,\mathbf{N})\right), \qquad (40)$$

which can be solved iteratively in a similar way. Setting the derivative w.r.t. $v_1$ to zero gives

$$\frac{\partial}{\partial \nu_1}\left(J(\nu_1,\nu_2,l,\mathbf{N})\right) =$$
$$-2l(\breve{\xi}(\mathbf{N}))^T \boldsymbol{\Sigma}_{\breve{\xi}(\mathbf{N})}^{-1} \frac{\partial \mathbf{r}(\nu_1,\nu_2)}{\partial \nu_1}$$
$$+2l^2\left(\frac{\partial \mathbf{r}(\nu_1,\nu_2)}{\partial \nu_1}\right)^T \boldsymbol{\Sigma}_{\breve{\xi}(\mathbf{N})}^{-1}\mathbf{r}(\nu_1,\nu_2) \overset{!}{=} 0. \qquad (41)$$

The third case includes a tight a priori knowledge of both angles and, thus, removes the nonlinearity due to the trigonometric functions. The minimization problem turns into

$$\min_{l,\mathbf{N}} J(\nu_1,\nu_2,l,\mathbf{N}), \qquad (42)$$

and can be solved in closed form for $l$, i.e.

$$\hat{l}(\mathbf{N}) = \frac{(\breve{\xi}(\mathbf{N}))^T \boldsymbol{\Sigma}_{\breve{\xi}(\mathbf{N})}^{-1}\mathbf{r}(\nu_1,\nu_2)}{(\mathbf{r}(\nu_1,\nu_2))^T \boldsymbol{\Sigma}_{\breve{\xi}(\mathbf{N})}^{-1}\mathbf{r}(\nu_1,\nu_2)}. \qquad (43)$$

### 3.3.2 Soft Constraints

The length and direction of the baseline 7 are not perfectly known in many applications, e.g. the baseline between the load 2 and helicopter 1 varies with elongation of the rope 8 and oscillations due to wind and, thus, does not correspond to a vector in zenith direction of a priori known length. A similar situation occurs during attitude determination of aircrafts: In this case, the baseline length between two receivers on the wings varies due to bending. Therefore, soft constraints are introduced for both length and direction. These constraints can be either included in the form of a Gaussian distribution or a uniform distribution of the baseline length and direction.

### 3.3.2.1 Gaussian Constraints

The constrained ambiguity resolution can be considered also as a maximum likelihood (ML) estimation or as a maximum a posteriori probability estimation. The latter one maximizes the a posteriori probability of the estimates of $v_1$, $v_2$ and $l$ for a given set $\Psi$. This maximization is rewritten with the rule of Bayes and the assumption of statistically independent $v_1$, $v_2$ and $l$ as

$$\max_{\nu_1,\nu_2,l} p(\nu_1,\nu_2,l \mid \mathbf{\Psi}) = \max_{\nu_1,\nu_2,l} p(\mathbf{\Psi} \mid \nu_1,\nu_2,l) \cdot \frac{p(\nu_1)p(\nu_2)p(l)}{p(\mathbf{\Psi})}, \quad (44)$$

where the conditional probability is obtained from

$$p(\mathbf{\Psi} \mid \nu_1,\nu_2,l) = \frac{1}{\sqrt{(2\pi)^2 \mid \mathbf{\Sigma} \mid}} e^{-\frac{1}{2}\|\mathbf{P\Psi}-\mathbf{Hr}(\nu_1,\nu_2)l-\mathbf{AN}\|^2_{\mathbf{\Sigma}^{-1}}} \quad (45)$$

and the a priori knowledge is assumed to be Gaussian distributed with known means and variances, i.e.

$$p(\nu_x) = \frac{1}{\sqrt{2\pi\sigma^2_{\bar{\nu}_x}}} e^{-\frac{(\nu_x-\bar{\nu}_x)^2}{2\sigma^2_{\bar{\nu}_x}}}, \quad x \in \{1,2\}$$

$$p(l) = \frac{1}{\sqrt{2\pi\sigma^2_{\bar{l}}}} e^{-\frac{(l-\bar{l})^2}{2\sigma^2_{\bar{l}}}}, \quad (46)$$

and $p(\Psi)$ being a normalization given by

$$p(\mathbf{\Psi}) = \int p(\mathbf{\Psi} \mid \nu_1,\nu_2,l)p(\nu_1)p(\nu_2)p(l)d\nu_1 d\nu_2 dl. \quad (47)$$

The maximization of (44) can be simplified by taking the logarithm and omitting the pre-factor that does not depend on $v_1$, $v_2$ and $l$, i.e.

$$\min_{\nu_1,\nu_2,l,\mathbf{N}} \tilde{J}(\nu_1,\nu_2,l,\mathbf{N}) = \min_{\nu_1,\nu_2,l,\mathbf{N}} \Big( \|\mathbf{P\Psi} - \mathbf{Hr}(\nu_1,\nu_2)l - \mathbf{AN}\|^2_{\mathbf{\Sigma}^{-1}} + \frac{(l-\bar{l})^2}{\sigma^2_{\bar{l}}} + \frac{(\nu_1-\bar{\nu}_1)^2}{\sigma^2_{\bar{\nu}_1}} + \frac{(\nu_2-\bar{\nu}_2)^2}{\sigma^2_{\bar{\nu}_2}} \Big), \quad (48)$$

which corresponds to the minimization of the first two terms of the unconstrained cost function of (22) plus three additive terms. The optimization over **N** is done in two steps: A search of a candidate set (that is described later) and a selection of the best candidate that minimizes the cost function $\tilde{J}$. For a fixed candidate **N,** the optimization over $l$ and $v_x$, $x \in \{1,2\}$ is performed by setting the derivatives equal to zero:

$$\frac{\partial}{\partial l}\left(\tilde{J}(\nu_1,\nu_2,l,\mathbf{N})\right) = -2(\breve{\xi}(\mathbf{N}))^T \boldsymbol{\Sigma}^{-1}_{\breve{\xi}(\mathbf{N})}\mathbf{r}(\nu_1,\nu_2) + 2l\cdot(\mathbf{r}(\nu_1,\nu_2))^T \boldsymbol{\Sigma}^{-1}_{\breve{\xi}(\mathbf{N})}\mathbf{r}(\nu_1,\nu_2) + \frac{2(l-\bar{l})}{\sigma^2_{\bar{l}}} \overset{!}{=} 0, \tag{49}$$

and

$$\frac{\partial}{\partial \nu_x}\left(\tilde{J}(\nu_1,\nu_2,l,\mathbf{N})\right) = -2l\cdot(\breve{\xi}(\mathbf{N}))^T \boldsymbol{\Sigma}^{-1}_{\breve{\xi}(\mathbf{N})}\frac{\partial \mathbf{r}(\nu_1,\nu_2)}{\partial \nu_x} + 2l^2\cdot\left(\frac{\partial \mathbf{r}(\nu_1,\nu_2)}{\partial \nu_x}\right)^T \boldsymbol{\Sigma}^{-1}_{\breve{\xi}(\mathbf{N})}\mathbf{r}(\nu_1,\nu_2) + \frac{2(\nu_x-\bar{\nu}_x)}{\sigma^2_{\bar{\nu}_x}} \overset{!}{=} 0, \tag{50}$$

which can be solved again iteratively with the Newton method.

Figure 4 demonstrates the benefit of tight and soft length constraints for integer least-squares estimation (ILS) [8]: The tight constraint (TC) reduces the probability of wrong unconstrained fixing by more than four orders of magnitude if the a priori length information is correct. The error rates are based on a simulation of Galileo double difference phase measurements on E1 and E5 of 4 epochs for a short baseline of 30 m. Phase-only measurements were considered to avoid code multipath, and a widelane combination with a wavelength of 78.1 cm was used to increase the success rate. A satellite geometry with 8 visible satellites was selected to obtain a typical performance. Obviously, the tight constraint makes the fixing also sensitive w.r.t. erroneous a priori information, i.e. it degrades the unconstrained performance if the error in the a priori information exceeds 50 cm. The soft constrained (SC) fixing takes the uncertainty in the length information into account and, thereby, improves the unconstrained fixing for any quality of the a priori information.

A comparison of the unconstrained, soft constrained and tightly constrained ambiguity resolution for erroneous baseline length a priori information shows that the tightly constrained ambiguity resolution outperforms the unconstrained and soft constrained fixing for perfect a priori knowledge but is extremely sensitive w.r.t. erroneous a priori information. The soft constrained ambiguity fixing benefits from the a priori information even if it is biased.

The reliability of ambiguity resolution can be further improved by including measurements from multiple epochs, i.e. by generalizing the cost function of equation (48) to

$$\tilde{J} = \sum_{i=1}^{I}\left(\left\| \mathbf{P}\boldsymbol{\Psi}_i - \mathbf{H}_i\mathbf{r}_i l_i - \mathbf{A}\mathbf{N}\right\|^2_{\boldsymbol{\Sigma}^{-1}} + \frac{(l_i-\bar{l}_i)^2}{\sigma^2_{\bar{l}_i}} + \frac{(\nu_{1,i}-\bar{\nu}_{1,i})^2}{\sigma^2_{\bar{\nu}_{1,i}}} + \frac{(\nu_{2,i}-\bar{\nu}_{2,i})^2}{\sigma^2_{\bar{\nu}_{2,i}}}\right), \tag{51}$$

which can be minimized over $v_{x,i}$ and $l_i$ jointly with the iterative Newton method.

In the *n*-th step, the estimate of the baseline and ambiguity parameters is given by

$$\begin{bmatrix} \hat{\nu}_1^{n+1} \\ \hat{\nu}_2^{n+1} \\ \hat{l}^{n+1} \\ \hat{\mathbf{N}}^{n+1} \end{bmatrix} = \begin{bmatrix} \hat{\nu}_1^{n} \\ \hat{\nu}_2^{n} \\ \hat{l}^{n} \\ \hat{\mathbf{N}}^{n} \end{bmatrix} - \mathbf{S}^{-1} \begin{bmatrix} \frac{\partial \tilde{\mathbf{J}}}{\partial \nu_1} \\ \frac{\partial \tilde{\mathbf{J}}}{\partial \nu_2} \\ \frac{\partial \tilde{\mathbf{J}}}{\partial l} \\ \frac{\partial \tilde{\mathbf{J}}}{\partial \mathbf{N}} \end{bmatrix}, \qquad (52)$$

where $\hat{v}_x$, $x \in \{1,2\}$, and $\hat{\mathbf{l}}$ include the estimates of all epochs, and the Hesse matrix is given by

$$\mathbf{S} = \begin{bmatrix} \frac{\partial^2 \tilde{\mathbf{J}}}{\partial^2 \nu_1} & \frac{\partial^2 \tilde{\mathbf{J}}}{\partial \nu_1 \partial \nu_2} & \frac{\partial^2 \tilde{\mathbf{J}}}{\partial \nu_1 \partial l} & \frac{\partial^2 \tilde{\mathbf{J}}}{\partial \nu_1 \partial \mathbf{N}} \\ \frac{\partial^2 \tilde{\mathbf{J}}}{\partial \nu_1 \partial \nu_2} & \frac{\partial^2 \tilde{\mathbf{J}}}{\partial^2 \nu_2} & \frac{\partial^2 \tilde{\mathbf{J}}}{\partial \nu_2 \partial l} & \frac{\partial^2 \tilde{\mathbf{J}}}{\partial \nu_2 \partial \mathbf{N}} \\ \frac{\partial^2 \tilde{\mathbf{J}}}{\partial \nu_1 \partial l} & \frac{\partial^2 \tilde{\mathbf{J}}}{\partial \nu_2 \partial l} & \frac{\partial^2 \tilde{\mathbf{J}}}{\partial^2 l} & \frac{\partial^2 \tilde{\mathbf{J}}}{\partial l \partial \mathbf{N}} \\ \frac{\partial^2 \tilde{\mathbf{J}}}{\partial \nu_1 \partial \mathbf{N}} & \frac{\partial^2 \tilde{\mathbf{J}}}{\partial \nu_2 \partial \mathbf{N}} & \frac{\partial^2 \tilde{\mathbf{J}}}{\partial l \partial \mathbf{N}} & \frac{\partial^2 \tilde{\mathbf{J}}}{\partial^2 \mathbf{N}} \end{bmatrix}. \qquad (53)$$

The iterative Newton method does not necessarily converge to the global optimum due to the nonlinearity of the cost function. One could perform the optimization for several random initializations around the a priori information and select the one with minimum $\tilde{J}$ to improve the probability of finding the global minimum. However, a single initialization was sufficient to find the global minimum in the following analysis.

Figure 5 and 6 show the achievable accuracies for the soft constrained estimation of a vertical baseline with $l$ = 10 m.

The minimization of (51) ensures an optimal trade-off between the minimization of the weighted range residuals and the minimization of the weighted difference between the estimated baseline parameters and their a priori knowledge. Consequently, the achievable accuracies depend on the accuracy of the double difference measurements (or, more specifically, on the accuracy of the widelane phase-only combination with $\lambda$ = 78.1 cm) and the accuracy of the a priori information ($\sigma_{v_1}$ = 30°, $\sigma_{v_2} = \infty$, $\sigma_l$ = 10$cm$). The latter one becomes especially beneficial for an increased phase noise level. Obviously, the elevation of the baseline can be determined with a higher accuracy than the length due to the relatively long baseline.

In particular Figure 5 shows soft constrained estimations of the baseline length for $l$ = 10 m and $v_1$ = 90°: The achievable accuracy depends on the noise level of the measurements, the noise amplifications due to double differencing, widelane combinations and the geometry, and the quality of the a priori information.

Figure 6 shows a soft constrained estimation of baseline elevation for $l$ = 10 m and $v_1$ = 90°: The a priori knowledge has only a minor impact on the estimation of the elevation due to the large baseline length, which enables a precise computation of its elevation.

### 4. Constrained Baseline and Ambiguity Resolution using A Priori Knowledge on Attitude and the Variation of Attitude

The proposed relative carrier phase positioning can be used in any application, where some heading information is required and satellite signals of a Global Navigation Satellite System (= GNSS) can be received. It has already been mentioned that the method described herein can be used for the stabilizing of a suspended freight. Another possible application is shown in Figur 7: The attitude determination of a cargo ship 25 has to be determined very accurately for the entering in narrow watergates or for the landing in harbours. The heading can be determined with at least two GNSS receivers 26, 27 and 28. The length and pitch angle of the baselines 7 between the receivers 26, 27, and 28 are tightly constrained, which enables a reliable integer ambiguity resolution. In addition the inertia due to the large mass of the cargo ship 25 can be used for improving the accuray of the baseline estimates of the baselines 7 betweeen the receivers 26, 27 and 28, the reliability of the ambiguity resolution can be increased with a state space model which describes the movement and exploits the inertia of the receivers 26, 27 and 28. This state space model, the GNSS measurements and the statistical a priori knowledge (e.g. from inertial sensors) can be ideally combined in an extended Kalman filter.

Figure 8 shows a flow diagram for the individual steps of the relative carrier phase positioning method for attitude determination. In first step, a calculation 29 of the double differences is performed, followed by a mult-frequency linear combination 30. Using a state space model 31, a MAP estimation 32 and/or a inequality constrained estimation 33 is performed, followed by a search 34 for integer ambiguities using a constrained search tree. Finally a MAP estimation 35 of the baseline length and attitude for a fixed ambiguity is performed.

Please note that the MAP estimation 32 corresponds to the determination 22 in Figure 3 and that the search 34 corresponds to the search 21 in Figure 3. The MAP estimation 35 finally includes the estimation 23 and selection 24 of Figure 3.

**4.1 Measurement Model**

The double difference code and carrier phases $\Delta\rho_n^k$, $\Delta\varphi_n^k$ from *K* satellites $k \in \{1,...,K\}$ at epoch $\{1,...,s\}$ in block *n* and the a priori knowledge about the pitch angle $\bar{v}_1$, the rate of the pitch angle $\bar{\dot{\nu}}_1$, the heading $\bar{v}_2$, the rate of turn $\bar{\dot{\nu}}_2$, and the baseline length $\bar{l}$ shall be considered in a single measurement vector, which is modeled as

$$
\underbrace{\begin{bmatrix}
\Delta\varphi_{n,1}^{1}\\ \vdots \\ \Delta\varphi_{n,1}^{K}\\ \Delta\rho_{n,1}^{1}\\ \vdots \\ \Delta\rho_{n,1}^{K}\\ \Delta\varphi_{n,2}^{1}\\ \vdots \\ \Delta\varphi_{n,2}^{K}\\ \Delta\rho_{n,2}^{1}\\ \vdots \\ \Delta\rho_{n,2}^{K}\\ \vdots \\ \Delta\varphi_{n,s}^{1}\\ \vdots \\ \Delta\varphi_{n,s}^{K}\\ \Delta\rho_{n,s}^{1}\\ \vdots \\ \Delta\rho_{n,s}^{K}\\ \bar{\nu}_{1,n}\\ \bar{\dot{\nu}}_{1,n}\\ \bar{\nu}_{2,n}\\ \bar{\dot{\nu}}_{2,n}\\ \bar{l}_{n}
\end{bmatrix}}_{\mathbf{z}_n}
=
\underbrace{\left[\begin{array}{c|c|c|c|c|c}
\Delta(\mathbf{e}_{n,1}^{1})^{T} & & & & \lambda & \\
\vdots & & & & \ddots & \\
\Delta(\mathbf{e}_{n,1}^{K})^{T} & & & & \lambda & \\
\Delta(\mathbf{e}_{n,1}^{1})^{T} & & & & & \\
\vdots & & & & & \\
\Delta(\mathbf{e}_{n,1}^{K})^{T} & & & & & \\
\hline
& \Delta(\mathbf{e}_{n,2}^{1})^{T} & & & \lambda & \\
& \vdots & & & \ddots & \\
& \Delta(\mathbf{e}_{n,2}^{K})^{T} & & & \lambda & \\
& \Delta(\mathbf{e}_{n,2}^{1})^{T} & & & & \\
& \vdots & & & & \\
& \Delta(\mathbf{e}_{n,2}^{K})^{T} & & & & \\
\hline
& & \ddots & & \vdots & \\
\hline
& & & \Delta(\mathbf{e}_{n,s}^{1})^{T} & \lambda & \\
& & & \vdots & \ddots & \\
& & & \Delta(\mathbf{e}_{n,s}^{K})^{T} & \lambda & \\
& & & \Delta(\mathbf{e}_{n,s}^{1})^{T} & & \\
& & & \vdots & & \\
& & & \Delta(\mathbf{e}_{n,s}^{K})^{T} & & \\
\hline
& & & & & \begin{matrix}1&&&&\\&1&&&\\&&1&&\\&&&1&\\&&&&1\end{matrix}
\end{array}\right]}_{\mathbf{H}}
\begin{bmatrix}
\boldsymbol{\xi}_n\\ \hline \mathbf{N}\\ \hline \nu_{1,n}\\ \dot{\nu}_{1,n}\\ \nu_{2,n}\\ \dot{\nu}_{2,n}\\ l_n
\end{bmatrix}
+\mathbf{v}_n, \qquad (54)
$$

where $\Delta\mathbf{e}_n^k$ denotes the single difference of unit vectors pointing from satellite $k$ and a reference satellite to the receiver, $l_n$ is the true baseline length, $\nu_{1,n}$ and $\nu_{2,n}$ are the true pitch and heading angles, $\dot{\nu}_{1,n}$ and $\dot{\nu}_{2,n}$ are the respective rate of turns, $\xi_n$ is the baseline in cartesian coordinates, $\mathbf{N}$ includes the integer ambiguities, $\lambda$ is the wavelength of the carrier signal and $\mathbf{v}_n$ denotes the measurement noise. The vector of baselines $\xi_n$ of $s$ epochs is modeled as

$$\boldsymbol{\xi}_n = \begin{bmatrix} l_n \cos(\nu_{1,n} + 1\cdot\delta t\cdot\dot{\nu}_{1,n})\cos(\nu_{2,n} + 1\cdot\delta t\cdot\dot{\nu}_{2,n}) \\ l_n \cos(\nu_{1,n} + 1\cdot\delta t\cdot\dot{\nu}_{1,n})\sin(\nu_{2,n} + 1\cdot\delta t\cdot\dot{\nu}_{2,n}) \\ l_n \sin(\nu_{1,n} + 1\cdot\delta t\cdot\dot{\nu}_{1,n}) \\ \hline l_n \cos(\nu_{1,n} + 2\cdot\delta t\cdot\dot{\nu}_{1,n})\cos(\nu_{2,n} + 2\cdot\delta t\cdot\dot{\nu}_{2,n}) \\ l_n \cos(\nu_{1,n} + 2\cdot\delta t\cdot\dot{\nu}_{1,n})\sin(\nu_{2,n} + 2\cdot\delta t\cdot\dot{\nu}_{2,n}) \\ l_n \sin(\nu_{1,n} + 2\cdot\delta t\cdot\dot{\nu}_{1,n}) \\ \hline \vdots \\ \hline l_n \cos(\nu_{1,n} + s\cdot\delta t\cdot\dot{\nu}_{1,n})\cos(\nu_{2,n} + s\cdot\delta t\cdot\dot{\nu}_{2,n}) \\ l_n \cos(\nu_{1,n} + s\cdot\delta t\cdot\dot{\nu}_{1,n})\sin(\nu_{2,n} + s\cdot\delta t\cdot\dot{\nu}_{2,n}) \\ l_n \sin(\nu_{1,n} + s\cdot\delta t\cdot\dot{\nu}_{1,n}) \end{bmatrix}, \quad (55)$$

with $\delta t$ being the time interval between two measurements. The notation shall now be simplified by writing equation (54) as

$$\mathbf{z}_n = \mathbf{H}\cdot\begin{bmatrix} \xi_n \\ \hline \mathbf{N} \\ \hline \nu_{1,n} \\ \dot{\nu}_{1,n} \\ \nu_{2,n} \\ \dot{\nu}_{2,n} \\ l_n \end{bmatrix} + \mathbf{v}_n, \quad (56)$$

which includes two equivalent descriptions of the baseline vector, i.e. $\xi_n$ in Cartesian coordinates and $\nu_{1,n}$, $\dot{\nu}_{1,n}$, $\nu_{2,n}$, $\dot{\nu}_{2,n}$ and $l_n$ in spherical coordinates. To avoid linear dependencies, the measurements shall be expressed solely as a function of the spherical baseline parameters $\nu_{1,n}$, $\dot{\nu}_{1,n}$, $\nu_{2,n}$, $\dot{\nu}_{2,n}$, $l_n$ and the ambiguities **N**. Moreover, the measurement model shall be further strengthened by assuming a block-wise constant $\nu_{1,n}$, $\dot{\nu}_{1,n}$, $\nu_{2,n}$, $\dot{\nu}_{2,n}$ and $l_n$. These extensions are reflected in the model

$$\mathbf{z}_n = \mathbf{h}_n(\mathbf{x}_n) + \mathbf{v}_n, \quad \text{with} \quad \mathbf{x}_n = \begin{bmatrix} \nu_{1,n} \\ \dot{\nu}_{1,n} \\ \nu_{2,n} \\ \dot{\nu}_{2,n} \\ l_n \\ \mathbf{N} \end{bmatrix}, \quad (57)$$

which includes 5 unknown real-valued parameters and $K$ unknown integer ambiguities. The non-linear function $\mathbf{h}_n(\mathbf{x}_n)$ is obtained by replacing $\xi_n$ in (54) by (55):

$$\mathbf{h}_n(\mathbf{x}_n) = \mathbf{H} \cdot \begin{bmatrix} l_n \cos(\nu_{1,n} + 1 \cdot \delta t \cdot \dot{\nu}_{1,n}) \cos(\nu_{2,n} + 1 \cdot \delta t \cdot \dot{\nu}_{2,n}) \\ l_n \cos(\nu_{1,n} + 1 \cdot \delta t \cdot \dot{\nu}_{1,n}) \sin(\nu_{2,n} + 1 \cdot \delta t \cdot \dot{\nu}_{2,n}) \\ l_n \sin(\nu_{1,n} + 1 \cdot \delta t \cdot \dot{\nu}_{1,n}) \\ \hline l_n \cos(\nu_{1,n} + 2 \cdot \delta t \cdot \dot{\nu}_{1,n}) \cos(\nu_{2,n} + 2 \cdot \delta t \cdot \dot{\nu}_{2,n}) \\ l_n \cos(\nu_{1,n} + 2 \cdot \delta t \cdot \dot{\nu}_{1,n}) \sin(\nu_{2,n} + 2 \cdot \delta t \cdot \dot{\nu}_{2,n}) \\ l_n \sin(\nu_{1,n} + 2 \cdot \delta t \cdot \dot{\nu}_{1,n}) \\ \hline \vdots \\ \hline l_n \cos(\nu_{1,n} + s \cdot \delta t \cdot \dot{\nu}_{1,n}) \cos(\nu_{2,n} + s \cdot \delta t \cdot \dot{\nu}_{2,n}) \\ l_n \cos(\nu_{1,n} + s \cdot \delta t \cdot \dot{\nu}_{1,n}) \sin(\nu_{2,n} + s \cdot \delta t \cdot \dot{\nu}_{2,n}) \\ l_n \sin(\nu_{1,n} + s \cdot \delta t \cdot \dot{\nu}_{1,n}) \\ \hline N^1 \\ \vdots \\ N^K \\ \hline \nu_{1,n} \\ \dot{\nu}_{1,n} \\ \nu_{2,n} \\ \dot{\nu}_{2,n} \\ l_n \end{bmatrix} \quad (58)$$

Note that the a priori knowledge is modeled as a stochastic quantity in (54), i.e. a Gaussian distribution with mean values $\bar{v}_{1,n}$, $\bar{\dot{\nu}}_{1,n}$, $\bar{v}_{2,n}$, $\bar{\dot{\nu}}_{2,n}$, $\bar{l}_n$ and respective variances $\sigma^2_{\bar{\nu}1,n}$, $\sigma^2_{\bar{\dot{\nu}}1,n}$, $\sigma^2_{\bar{\nu}2,n}$, $\sigma^2_{\bar{\dot{\nu}}2,n}$ and $\sigma^2_{\bar{l}n}$. The statistical modeling is advantageous as the true baseline parameters are not perfectly known in many applications. Consequently, a weighted least-squares baseline estimation based on the measurement model of (54) ensures a solution, which represents the optimum trade-off between low range residuals and a baseline close to the a priori knowledge.

**4.2 Relative carrier phase positioning method**

In the following, the estimation 32 of Figur 8 is described in detail.

**4.2.1 MAP estimation of ambiguities and baselines**

A Maximum Likelihood (ML) estimator tries to find the baseline parameters $v_{1,n}$, $\dot{v}_{1,n}$, $v_{2,n}$, $\dot{v}_{2,n}$, $l_n$ and integer or float ambiguities **N,** which have generated the measurements $\mathbf{z}_n$ with highest likelihood, i.e.

$$\max_{\nu_{1,n},\dot{\nu}_{1,n},\nu_{2,n},\dot{\nu}_{2,n},l_n} p(\mathbf{z}_n \mid \nu_{1,n},\dot{\nu}_{1,n},\nu_{2,n},\dot{\nu}_{2,n},l_n,\mathbf{N}). \quad (59)$$

An even more powerful estimator is the Maximum A Posteriori (MAP) probability estimator, which maximizes the probability of $v_{1,n}$, $\dot{v}_{1,n}$, $v_{2,n}$, $\dot{v}_{2,n}$ and $l_n$ for a given $\mathbf{z}_n$. The MAP estimator is defined as

$$\max_{\nu_{1,n},\dot{\nu}_{1,n},\nu_{2,n},\dot{\nu}_{2,n},l_n,\mathbf{N}} p(\nu_{1,n},\dot{\nu}_{1,n},\nu_{2,n},\dot{\nu}_{2,n},l_n,\mathbf{N}\mid\mathbf{z}_n)$$

$$=\max_{\nu_{1,n},\dot{\nu}_{1,n},\nu_{2,n},\dot{\nu}_{2,n},l_n,\mathbf{N}} p(\mathbf{z}_n\mid\nu_{1,n},\dot{\nu}_{1,n},\nu_{2,n},\dot{\nu}_{2,n},l_n,\mathbf{N})\cdot\frac{p(\nu_{1,n},\dot{\nu}_{1,n},\nu_{2,n},\dot{\nu}_{2,n},l_n,\mathbf{N})}{p(\mathbf{z}_n)}, \quad (60)$$

where the re-formulation is obtained with the rule of Bayes. The first (conditional) probability density describes the measurement noise, which is typically assumed to be Gaussian distributed, i.e.

$$p(\mathbf{z}_n\mid\nu_{n,1},\dot{\nu}_{1,n},\nu_{n,2},\dot{\nu}_{n,2},l_n,\mathbf{N})=\frac{1}{\sqrt{(2\pi)^p\,|\boldsymbol{\Sigma}_n|}}e^{-\frac{1}{2}\|\mathbf{z}_n-\mathbf{h}_n(\nu_{1,n},\dot{\nu}_{1,n},\nu_{2,n},\dot{\nu}_{2,n},l_n,\mathbf{N})\|^2_{\boldsymbol{\Sigma}_n^{-1}}}, \quad (61)$$

where $\Sigma_n$ describes the covariance matrix of the measurement noise and $p = 2sK + 5$. The second (joint) probability density of equation (60) describes the statistical a priori information about the baseline orientation/ length and integer ambiguities. This a priori information shall be assumed statistically independent, and Gaussian distributed with means according to the true baseline parameters, i.e.

$$p(\bar{\nu}_x)=\frac{1}{\sqrt{2\pi\sigma^2_{\bar{\nu}_x}}}e^{-\frac{(\bar{\nu}_x-\nu_x)^2}{2\sigma^2_{\bar{\nu}_x}}}, \quad x\in\{1,2\}$$

$$p(\bar{\dot{\nu}}_x)=\frac{1}{\sqrt{2\pi\sigma^2_{\bar{\dot{\nu}}_x}}}e^{-\frac{(\bar{\dot{\nu}}_x-\dot{\nu}_x)^2}{2\sigma^2_{\bar{\dot{\nu}}_x}}}, \quad x\in\{1,2\}$$

$$p(\bar{l})=\frac{1}{\sqrt{2\pi\sigma^2_{\bar{l}}}}e^{-\frac{(\bar{l}-l)^2}{2\sigma^2_{\bar{l}}}},$$

$$p(\mathbf{N})=\frac{1}{\sqrt{2\pi\,|\boldsymbol{\Sigma}_{\bar{N}}|}}e^{-\frac{1}{2}\|\bar{\mathbf{N}}-\mathbf{N}\|^2_{\boldsymbol{\Sigma}_{\bar{\mathbf{N}}}^{-1}}}. \quad (62)$$

The third probability distribution (i.e. the one in the denominator) of equation (60) can be considered as a marginal distribution, i.e.

$$p(\mathbf{z}_n)=\iiiint\!\!\iint p\left(\mathbf{z}_n\mid\nu_{1,n},\dot{\nu}_{1,n},\nu_{2,n},\dot{\nu}_{2,n},l_n,\mathbf{N}\right)$$

$$p(\nu_{1,n})p(\dot{\nu}_{1,n})p(\nu_{2,n})p(\dot{\nu}_{2,n})p(l_n)p(\mathbf{N})d\nu_{1,n}d\dot{\nu}_{1,n}d\nu_{2,n}d\dot{\nu}_{2,n}dl_n d\mathbf{N}. \quad (63)$$

The maximization of (60) can be simplified by taking the logarithm and omitting the pre-factor that does not depend on $\nu_{1,n}$, $\dot{\nu}_{1,n}$, $\nu_{2,n}$, $\dot{\nu}_{2,n}$ and $l_n$, i.e.

$$\max_{\nu_{1,n},\dot{\nu}_{1,n},\nu_{2,n},\dot{\nu}_{2,n},l_n,\mathbf{N}} p(\nu_{1,n},\dot{\nu}_{1,n},\nu_{2,n},\dot{\nu}_{2,n},l_n,\mathbf{N}\,|\,\mathbf{z}_n)$$

$$= \min_{\nu_{1,n},\dot{\nu}_{1,n},\nu_{2,n},\dot{\nu}_{2,n},l_n,\mathbf{N}} \Bigg( \|\mathbf{z}_n - \mathbf{h}_n(\nu_{1,n},\dot{\nu}_{1,n},\nu_{2,n},\dot{\nu}_{2,n},l_n,\mathbf{N})\|^2_{\Sigma_n^{-1}}$$

$$+\frac{(\nu_{1,n}-\bar{\nu}_{1,n})^2}{\sigma^2_{\bar{\nu}_{1,n}}}+\frac{(\dot{\nu}_{1,n}-\bar{\dot{\nu}}_{1,n})^2}{\sigma^2_{\bar{\dot{\nu}}_{1,n}}}+\frac{(\nu_{2,n}-\bar{\nu}_{2,n})^2}{\sigma^2_{\bar{\nu}_{2,n}}}+\frac{(\dot{\nu}_{2,n}-\bar{\dot{\nu}}_{2,n})^2}{\sigma^2_{\bar{\dot{\nu}}_{2,n}}}+\frac{(l_n-\bar{l}_n)^2}{\sigma^2_{\bar{l}}}+\|\mathbf{N}-\bar{\mathbf{N}}\|^2_{\Sigma_N^{-1}}\Bigg), \quad (64)$$

where the first term on the right side describes the squared range residuals and the remaining terms denote the squared deviation of the unknown baseline parameters from their a priori knowledge. In general, there is no a priori knowledge available for the ambiguities, such that the minimization simplifies to

$$\max_{\nu_{1,n},\dot{\nu}_{1,n},\nu_{2,n},\dot{\nu}_{2,n},l_n,\mathbf{N}} p(\nu_{1,n},\dot{\nu}_{1,n},\nu_{2,n},\dot{\nu}_{2,n},l_n,\mathbf{N}\,|\,\mathbf{z}_n) = \min_{\nu_{1,n},\dot{\nu}_{1,n},\nu_{2,n},\dot{\nu}_{2,n},l_n,\mathbf{N}} C\left(\mathbf{z}_n,\nu_{1,n},\dot{\nu}_{1,n},\nu_{2,n},\dot{\nu}_{2,n},l_n,\mathbf{N}\right) \quad (65)$$

with the cost function

$$C\left(\mathbf{z}_n,\nu_{1,n},\dot{\nu}_{1,n},\nu_{2,n},\dot{\nu}_{2,n},l_n,\mathbf{N}\right)=\|\mathbf{z}_n-\mathbf{h}_n(\nu_{1,n},\dot{\nu}_{1,n},\nu_{2,n},\dot{\nu}_{2,n},l_n,\mathbf{N})\|^2_{\Sigma_n^{-1}}$$
$$+\frac{(\nu_{1,n}-\bar{\nu}_{1,n})^2}{\sigma^2_{\bar{\nu}_{1,n}}}+\frac{(\dot{\nu}_{1,n}-\bar{\dot{\nu}}_{1,n})^2}{\sigma^2_{\bar{\dot{\nu}}_{1,n}}}$$
$$+\frac{(\nu_{2,n}-\bar{\nu}_{2,n})^2}{\sigma^2_{\bar{\nu}_{2,n}}}+\frac{(\dot{\nu}_{2,n}-\bar{\dot{\nu}}_{2,n})^2}{\sigma^2_{\bar{\dot{\nu}}_{2,n}}}+\frac{(l_n-\bar{l}_n)^2}{\sigma^2_{\bar{l}}}. \quad (66)$$

Minimizing the cost function means that the derivatives have to be set to 0, i.e.

$$\frac{\partial C}{\partial \nu_{x,n}} = 2\cdot\|\mathbf{z}_n-\mathbf{h}_n(\nu_{1,n},\nu_{2,n},\dot{\nu}_{2,n},l_n,\mathbf{N})\|_{\Sigma_n^{-1}}\cdot\left(-\frac{\partial \mathbf{h}_n}{\partial \nu_{x,n}}\right)-\frac{2(\nu_{x,n}-\bar{\nu}_{x,n})}{\sigma^2_{\bar{\nu}_{x,n}}}\overset{!}{=}0,\quad x\in\{1,2\}$$

$$\frac{\partial C}{\partial \dot{\nu}_{x,n}} = 2\cdot\|\mathbf{z}_n-\mathbf{h}_n(\nu_{1,n},\nu_{2,n},\dot{\nu}_{2,n},l_n,\mathbf{N})\|_{\Sigma_n^{-1}}\cdot\left(-\frac{\partial \mathbf{h}_n}{\partial \dot{\nu}_{x,n}}\right)-\frac{2(\dot{\nu}_{x,n}-\bar{\dot{\nu}}_{x,n})}{\sigma^2_{\bar{\dot{\nu}}_{x,n}}}\overset{!}{=}0,\quad x\in\{1,2\}$$

$$\frac{\partial C}{\partial l_n} = 2\cdot\|\mathbf{z}_n-\mathbf{h}_n(\nu_{1,n},\nu_{2,n},\dot{\nu}_{2,n},l_n,\mathbf{N})\|_{\Sigma_n^{-1}}\cdot\left(-\frac{\partial \mathbf{h}_n}{\partial l_n}\right)-\frac{2(l_n-\bar{l}_n)}{\sigma^2_{\bar{l}_n}}\overset{!}{=}0$$

$$\frac{\partial C}{\partial \mathbf{N}} = 2\cdot\|\mathbf{z}_n-\mathbf{h}_n(\nu_{1,n},\nu_{2,n},\dot{\nu}_{2,n},l_n,\mathbf{N})\|_{\Sigma_n^{-1}}\cdot\left(-\frac{\partial \mathbf{h}_n}{\partial \mathbf{N}}\right)\overset{!}{=}0, \quad (67)$$

which includes $K + 5$ partial derivatives.

The partial derivative w.r.t. the pitch angle $\nu_{1,n}$ is given by

$$\frac{\partial \mathbf{h}_n}{\partial \nu_{1,n}} = \mathbf{H}\left[\begin{array}{c} -l_n \sin\left(\nu_{1,n} + 1\cdot\delta t\cdot\dot{\nu}_{1,n}\right)\cos\left(\nu_{2,n} + 1\cdot\delta t\cdot\dot{\nu}_{2,n}\right) \\ -l_n \sin\left(\nu_{1,n} + 1\cdot\delta t\cdot\dot{\nu}_{1,n}\right)\sin\left(\nu_{2,n} + 1\cdot\delta t\cdot\dot{\nu}_{2,n}\right) \\ l_n \cos\left(\nu_{1,n} + 1\cdot\delta t\cdot\dot{\nu}_{1,n}\right) \\ \hline -l_n \sin\left(\nu_{1,n} + 2\cdot\delta t\cdot\dot{\nu}_{1,n}\right)\cos\left(\nu_{2,n} + 2\cdot\delta t\cdot\dot{\nu}_{2,n}\right) \\ -l_n \sin\left(\nu_{1,n} + 2\cdot\delta t\cdot\dot{\nu}_{1,n}\right)\sin\left(\nu_{2,n} + 2\cdot\delta t\cdot\dot{\nu}_{2,n}\right) \\ l_n \cos\left(\nu_{1,n} + 2\cdot\delta t\cdot\dot{\nu}_{1,n}\right) \\ \hline \vdots \\ \hline -l_n \sin\left(\nu_{1,n} + s\cdot\delta t\cdot\dot{\nu}_{1,n}\right)\cos\left(\nu_{2,n} + s\cdot\delta t\cdot\dot{\nu}_{2,n}\right) \\ -l_n \sin\left(\nu_{1,n} + s\cdot\delta t\cdot\dot{\nu}_{1,n}\right)\sin\left(\nu_{2,n} + s\cdot\delta t\cdot\dot{\nu}_{2,n}\right) \\ l_n \cos\left(\nu_{1,n} + s\cdot\delta t\cdot\dot{\nu}_{1,n}\right) \\ \hline \mathbf{0} \\ \hline 1 \\ 0 \\ 0 \\ 0 \\ 0 \end{array}\right], \qquad (68)$$

and the partial derivative w.r.t. the rate of turn $\dot{\nu}_{1,n}$ follows as

$$\frac{\partial \mathbf{h}_n}{\partial \dot{\nu}_{1,n}} = \mathbf{H}\left[\begin{array}{c} -l_n \sin\left(\nu_{1,n} + 1\cdot\delta t\cdot\dot{\nu}_{1,n}\right)\cos\left(\nu_{2,n} + 1\cdot\delta t\cdot\dot{\nu}_{2,n}\right)\cdot 1\cdot\delta t \\ -l_n \sin\left(\nu_{1,n} + 1\cdot\delta t\cdot\dot{\nu}_{1,n}\right)\sin\left(\nu_{2,n} + 1\cdot\delta t\cdot\dot{\nu}_{2,n}\right)\cdot 1\cdot\delta t \\ l_n \cos\left(\nu_{1,n} + 1\cdot\delta t\cdot\dot{\nu}_{1,n}\right)\cdot 1\cdot\delta t \\ \hline -l_n \sin\left(\nu_{1,n} + 2\cdot\delta t\cdot\dot{\nu}_{1,n}\right)\cos\left(\nu_{2,n} + 2\cdot\delta t\cdot\dot{\nu}_{2,n}\right)\cdot 2\cdot\delta t \\ -l_n \sin\left(\nu_{1,n} + 2\cdot\delta t\cdot\dot{\nu}_{1,n}\right)\sin\left(\nu_{2,n} + 2\cdot\delta t\cdot\dot{\nu}_{2,n}\right)\cdot 2\cdot\delta t \\ l_n \cos\left(\nu_{1,n} + 2\cdot\delta t\cdot\dot{\nu}_{1,n}\right)\cdot 2\cdot\delta t \\ \hline \vdots \\ \hline -l_n \sin\left(\nu_{1,n} + s\cdot\delta t\cdot\dot{\nu}_{1,n}\right)\cos\left(\nu_{2,n} + s\cdot\delta t\cdot\dot{\nu}_{2,n}\right)\cdot s\cdot\delta t \\ -l_n \sin\left(\nu_{1,n} + s\cdot\delta t\cdot\dot{\nu}_{1,n}\right)\sin\left(\nu_{2,n} + s\cdot\delta t\cdot\dot{\nu}_{2,n}\right)\cdot s\cdot\delta t \\ l_n \cos\left(\nu_{1,n} + s\cdot\delta t\cdot\dot{\nu}_{1,n}\right)\cdot s\cdot\delta t \\ \hline \mathbf{0} \\ \hline 0 \\ 1 \\ 0 \\ 0 \\ 0 \end{array}\right]. \qquad (69)$$

Similarly, the partial derivative w.r.t. the heading $\nu_{2,n}$ can be derived as

$$\frac{\partial \mathbf{h}}{\partial \nu_{2,n}} = \mathbf{H}\left[\begin{array}{c} -l_n \cos\left(\nu_{1,n} + 1 \cdot \delta t \cdot \dot{\nu}_{1,n}\right)\sin\left(\nu_{2,n} + 1 \cdot \delta t \cdot \dot{\nu}_{2,n}\right) \\ l_n \cos\left(\nu_{1,n} + 1 \cdot \delta t \cdot \dot{\nu}_{1,n}\right)\cos\left(\nu_{2,n} + 1 \cdot \delta t \cdot \dot{\nu}_{2,n}\right) \\ 0 \\ \hline -l_n \cos\left(\nu_{1,n} + 2 \cdot \delta t \cdot \dot{\nu}_{1,n}\right)\sin\left(\nu_{2,n} + 2 \cdot \delta t \cdot \dot{\nu}_{2,n}\right) \\ l_n \cos\left(\nu_{1,n} + 2 \cdot \delta t \cdot \dot{\nu}_{1,n}\right)\cos\left(\nu_{2,n} + 2 \cdot \delta t \cdot \dot{\nu}_{2,n}\right) \\ 0 \\ \hline \vdots \\ \hline -l_n \cos\left(\nu_{1,n} + s \cdot \delta t \cdot \dot{\nu}_{1,n}\right)\sin\left(\nu_{2,n} + s \cdot \delta t \cdot \dot{\nu}_{2,n}\right) \\ l_n \cos\left(\nu_{1,n} + s \cdot \delta t \cdot \dot{\nu}_{1,n}\right)\cos\left(\nu_{2,n} + s \cdot \delta t \cdot \dot{\nu}_{2,n}\right) \\ 0 \\ \hline \mathbf{0} \\ \hline 0 \\ 0 \\ 1 \\ 0 \\ 0 \end{array}\right], \qquad (70)$$

the partial derivative w.r.t. the rate of turn $\dot{\nu}_{2,n}$ follows as

$$\frac{\partial \mathbf{h}}{\partial \dot{\nu}_{2,n}} = \mathbf{H}\left[\begin{array}{c} -l_n \cos\left(\nu_{1,n} + 1 \cdot \delta t \cdot \dot{\nu}_{1,n}\right)\sin\left(\nu_{2,n} + 1 \cdot \delta t \cdot \dot{\nu}_{2,n}\right) \cdot 1 \cdot \delta t \\ l_n \cos\left(\nu_{1,n} + 1 \cdot \delta t \cdot \dot{\nu}_{1,n}\right)\cos\left(\nu_{2,n} + 1 \cdot \delta t \cdot \dot{\nu}_{2,n}\right) \cdot 1 \cdot \delta t \\ 0 \\ \hline -l_n \cos\left(\nu_{1,n} + 2 \cdot \delta t \cdot \dot{\nu}_{1,n}\right)\sin\left(\nu_{2,n} + 2 \cdot \delta t \cdot \dot{\nu}_{2,n}\right) \cdot 2 \cdot \delta t \\ l_n \cos\left(\nu_{1,n} + 2 \cdot \delta t \cdot \dot{\nu}_{1,n}\right)\cos\left(\nu_{2,n} + 2 \cdot \delta t \cdot \dot{\nu}_{2,n}\right) \cdot 2 \cdot \delta t \\ 0 \\ \hline \vdots \\ \hline -l_n \cos\left(\nu_{1,n} + s \cdot \delta t \cdot \dot{\nu}_{1,n}\right)\sin\left(\nu_{2,n} + s \cdot \delta t \cdot \dot{\nu}_{2,n}\right) \cdot s \cdot \delta t \\ l_n \cos\left(\nu_{1,n} + s \cdot \delta t \cdot \dot{\nu}_{1,n}\right)\cos\left(\nu_{2,n} + s \cdot \delta t \cdot \dot{\nu}_{2,n}\right) \cdot s \cdot \delta t \\ 0 \\ \hline \mathbf{0} \\ \hline 0 \\ 0 \\ 0 \\ 1 \\ 0 \end{array}\right]. \qquad (71)$$

Finally, the partial derivatives w.r.t. the baseline length $l_n$ and integer ambiguity $N^k$, $k \in \{1,...,K\}$ are determined:

$$\frac{\partial \mathbf{h}}{\partial l_n} = \mathbf{H} \begin{bmatrix} \cos(\nu_{1,n} + 1 \cdot \delta t \cdot \dot{\nu}_{1,n}) \cos(\nu_{2,n} + 1 \cdot \delta t \cdot \dot{\nu}_{2,n}) \\ \cos(\nu_{1,n} + 1 \cdot \delta t \cdot \dot{\nu}_{1,n}) \sin(\nu_{2,n} + 1 \cdot \delta t \cdot \dot{\nu}_{2,n}) \\ \sin(\nu_{1,n} + 1 \cdot \delta t \cdot \dot{\nu}_{1,n}) \\ \hline \cos(\nu_{1,n} + 2 \cdot \delta t \cdot \dot{\nu}_{1,n}) \cos(\nu_{2,n} + 2 \cdot \delta t \cdot \dot{\nu}_{2,n}) \\ \cos(\nu_{1,n} + 2 \cdot \delta t \cdot \dot{\nu}_{1,n}) \sin(\nu_{2,n} + 2 \cdot \delta t \cdot \dot{\nu}_{2,n}) \\ \sin(\nu_{1,n} + 2 \cdot \delta t \cdot \dot{\nu}_{1,n}) \\ \hline \vdots \\ \hline \cos(\nu_{1,n} + s \cdot \delta t \cdot \dot{\nu}_{1,n}) \cos(\nu_{2,n} + s \cdot \delta t \cdot \dot{\nu}_{2,n}) \\ \cos(\nu_{1,n} + s \cdot \delta t \cdot \dot{\nu}_{1,n}) \sin(\nu_{2,n} + s \cdot \delta t \cdot \dot{\nu}_{2,n}) \\ \sin(\nu_{1,n} + s \cdot \delta t \cdot \dot{\nu}_{1,n}) \\ \hline \mathbf{0} \\ \hline 0 \\ 0 \\ 0 \\ 0 \\ 1 \end{bmatrix}, \quad \text{and} \quad \frac{\partial \mathbf{h}}{\partial N^k} = \mathbf{H} \begin{bmatrix} 0 \\ 0 \\ 0 \\ \hline 0 \\ 0 \\ 0 \\ \hline \vdots \\ \hline 0 \\ 0 \\ 0 \\ \hline \mathbf{0}^{k-1 \times 1} \\ 1 \\ \mathbf{0}^{K-k \times 1} \\ \hline 0 \\ \vdots \\ 0 \end{bmatrix}. \qquad (72)$$

The system of equations of (67) can not be solved in closed form due to its non-linearity. Therefore, an iterative solution is computed with the Gauss-Newton method.

#### 4.2.2 Iterative Least-Squares Estimation with Gaussian A Priori Information about Baseline Length and Attitude

The Gauss-Newton method is used to solve the system of equations (67) iteratively. In the $l \in \{1,...,L\}$ th iteration, the baseline and float ambiguity estimates are obtained from

$$\begin{bmatrix} \hat{\nu}_{1,n}^{(l)} \\ \hat{\dot{\nu}}_{1,n}^{(l)} \\ \hat{\nu}_{2,n}^{(l)} \\ \hat{\dot{\nu}}_{2,n}^{(l)} \\ \hat{l}_n^{(l)} \\ \hat{\mathbf{N}}_n^{(l)} \end{bmatrix} = \begin{bmatrix} \hat{\nu}_{1,n}^{(l-1)} \\ \hat{\dot{\nu}}_{1,n}^{(l-1)} \\ \hat{\nu}_{2,n}^{(l-1)} \\ \hat{\dot{\nu}}_{2,n}^{(l-1)} \\ \hat{l}_n^{(l-1)} \\ \hat{\mathbf{N}}_n^{(l-1)} \end{bmatrix} - \mathbf{S}^{-1} \begin{bmatrix} \frac{\partial C}{\partial \nu_{1,n}} \\ \frac{\partial C}{\partial \dot{\nu}_{1,n}} \\ \frac{\partial C}{\partial \nu_{2,n}} \\ \frac{\partial C}{\partial \dot{\nu}_{2,n}} \\ \frac{\partial C}{\partial l_n} \\ \frac{\partial C}{\partial \mathbf{N}} \end{bmatrix}, \qquad (73)$$

with the Hesse matrix

$$\mathbf{S}=\begin{bmatrix} \frac{\partial^2 C}{\partial^2 v_{1,n}} & \frac{\partial^2 C}{\partial v_{1,n}\partial \dot{v}_{1,n}} & \frac{\partial^2 C}{\partial v_{1,n}\partial v_{2,n}} & \frac{\partial^2 C}{\partial v_{1,n}\partial \dot{v}_{2,n}} & \frac{\partial^2 C}{\partial v_{1,n}\partial l_n} & \frac{\partial^2 C}{\partial v_{1,n}\partial \mathbf{N}} \\ \frac{\partial^2 C}{\partial \dot{v}_{1,n}\partial v_{1,n}} & \frac{\partial^2 C}{\partial^2 \dot{v}_{1,n}} & \frac{\partial^2 C}{\partial \dot{v}_{1,n}\partial v_{2,n}} & \frac{\partial^2 C}{\partial \dot{v}_{1,n}\partial \dot{v}_{2,n}} & \frac{\partial^2 C}{\partial \dot{v}_{1,n}\partial l_n} & \frac{\partial^2 C}{\partial \dot{v}_{1,n}\partial \mathbf{N}} \\ \frac{\partial^2 C}{\partial v_{2,n}\partial v_{1,n}} & \frac{\partial^2 C}{\partial v_{2,n}\dot{v}_{1,n}} & \frac{\partial^2 C}{\partial^2 v_{2,n}} & \frac{\partial^2 C}{\partial v_{2,n}\dot{v}_{2,n}} & \frac{\partial^2 C}{\partial v_{2,n} l_n} & \frac{\partial^2 C}{\partial v_{2,n}\partial \mathbf{N}} \\ \frac{\partial^2 C}{\partial \dot{v}_{2,n}\partial v_{1,n}} & \frac{\partial^2 C}{\partial \dot{v}_{2,n}\partial \dot{v}_{1,n}} & \frac{\partial^2 C}{\partial \dot{v}_{2,n}\partial v_{2,n}} & \frac{\partial^2 C}{\partial^2 \dot{v}_{2,n}} & \frac{\partial^2 C}{\partial \dot{v}_{2,n}\partial l_n} & \frac{\partial^2 C}{\partial \dot{v}_{2,n}\partial \mathbf{N}} \\ \frac{\partial^2 C}{\partial l_n\partial v_{1,n}} & \frac{\partial^2 C}{\partial l_n\partial \dot{v}_{1,n}} & \frac{\partial^2 C}{\partial l_n\partial v_{2,n}} & \frac{\partial^2 C}{\partial l_n\partial \dot{v}_{2,n}} & \frac{\partial^2 C}{\partial^2 l_n} & \frac{\partial^2 C}{\partial l_n\partial \mathbf{N}} \\ \frac{\partial^2 C}{\partial \mathbf{N}\partial v_{1,n}} & \frac{\partial^2 C}{\partial \mathbf{N}\partial \dot{v}_{1,n}} & \frac{\partial^2 C}{\partial \mathbf{N}\partial v_{2,n}} & \frac{\partial^2 C}{\partial \mathbf{N}\partial \dot{v}_{2,n}} & \frac{\partial^2 C}{\partial \mathbf{N}\partial l_n} & \frac{\partial^2 C}{\partial^2 \mathbf{N}} \end{bmatrix}. \quad (74)$$

The Gauss-Newton method is initialized by the converged state estimate of the previous block, i.e.

$$\begin{bmatrix} \hat{v}_{1,n}^{(1)} \\ \hat{v}_{2,n}^{(1)} \\ \hat{\dot{v}}_{2,n}^{(1)} \\ \hat{l}_n^{(1)} \\ \hat{\mathbf{N}}_n^{(1)} \end{bmatrix} = \begin{bmatrix} \hat{v}_{1,n-1}^{(L)} \\ \hat{v}_{2,n-1}^{(L)} \\ \hat{\dot{v}}_{2,n-1}^{(L)} \\ \hat{l}_{n-1}^{(L)} \\ \hat{\mathbf{N}}_{n-1}^{(L)} \end{bmatrix}. \quad (75)$$

The iterative Newton method does not necessarily converge to the global optimum due to the nonlinearity of the cost function *C*. However, one can repeat the computation for a few random initializations around the a priori information, and select the one with minimum *C* to increase the probability of finding the global minimum.

### 4.2.3 Improving accuracy and reliability of attitude determination with state space model and Kalman filtering

The accuracy of joint baseline and ambiguity estimation can be improved by a state space model, which describes the movement of receivers. Such a state space model can be especially tight for maritime navigation due the large inertia of ships. Assuming Gauss-Markov processes for the rates $\{\dot{v}_{1,n}, \dot{v}_{2,n}\}$ and the baseline length $l_n$, the state space model is obtained as

$$\underbrace{\begin{bmatrix} \nu_{1,n} \\ \dot{\nu}_{1,n} \\ \nu_{2,n} \\ \dot{\nu}_{2,n} \\ l_n \\ \mathbf{N} \end{bmatrix}}_{\mathbf{x}_n} = \underbrace{\left[\begin{array}{cc|cc|c|c} 1 & s\cdot\delta t & & & & \\ & 1 & & & & \\ \hline & & 1 & s\cdot\delta t & & \\ & & & 1 & & \\ \hline & & & & 1 & \\ & & & & & \mathbf{1} \end{array}\right]}_{\mathbf{\Phi}} \underbrace{\begin{bmatrix} \nu_{1,n-1} \\ \dot{\nu}_{1,n-1} \\ \nu_{2,n-1} \\ \dot{\nu}_{2,n-1} \\ l_{n-1} \\ \mathbf{N} \end{bmatrix}}_{\mathbf{x}_{n-1}} + \underbrace{\begin{bmatrix} w_{\nu_{1,n}} \\ w_{\dot{\nu}_{1,n}} \\ w_{\nu_{2,n}} \\ w_{\dot{\nu}_{2,n}} \\ w_{l_n} \\ w_{\mathbf{N}} \end{bmatrix}}_{\mathbf{w}_n}. \qquad (76)$$

This state space model is included into the MAP estimation by a Kalman filter, which combines the GNSS measurements, the a priori information and the state space model. The Kalman filter includes a linear prediction of the state estimate from one block to the next one, i.e.

$$\begin{aligned} \hat{\mathbf{x}}_{n+1}^- &= \mathbf{\Phi}_n \hat{\mathbf{x}}_n^+ \\ \mathbf{P}_{\hat{\mathbf{x}}_{n+1}^-} &= \mathbf{\Phi}_n \mathbf{P}_{\hat{\mathbf{x}}_n^+} \mathbf{\Phi}_n^T + \mathbf{Q}_{n+1}, \end{aligned} \qquad (77)$$

where the second row describes the process noise covariance matrix obtained by error propagation. Once the new measurement is available, the state estimate is updated, i.e.

$$\hat{\mathbf{x}}_n^+ = \hat{\mathbf{x}}_n^- + \mathbf{K}_n \left(\mathbf{z}_n - \mathbf{h}_n(\hat{\mathbf{x}}_n^-)\right), \qquad (78)$$

where $\mathbf{K}_n$ is the Kalman gain, which is computed such that the variance of the norm of the a posteriori state estimate is minimized, i.e.

$$\mathbf{K}_n = \arg\min_{K_n} E\{\|\hat{\mathbf{x}}_n^+ - E\{\hat{\mathbf{x}}_n^+\}\|^2\}. \qquad (79)$$

This minimization of a variance of a highly non-linear function of Gaussian random variables can not be performed in closed form. Therefore, the function $\mathbf{h}_n(\mathbf{x}_n)$ is linearized around an initial state $\mathbf{x}_0$, i.e.

$$\begin{aligned} \mathbf{h}_n(\mathbf{x}_n) &= \mathbf{h}_n(\mathbf{x}_0) \\ &+ \left.\frac{\partial \mathbf{h}(\mathbf{x})}{\partial \nu_1}\right|_{\mathbf{x}=\mathbf{x}_0} \cdot (\nu_{1,n} - \nu_{1,0}) + \left.\frac{\partial \mathbf{h}(\mathbf{x})}{\partial \dot{\nu}_1}\right|_{\mathbf{x}=\mathbf{x}_0} \cdot (\dot{\nu}_{1,n} - \dot{\nu}_{1,0}) \\ &+ \left.\frac{\partial \mathbf{h}(\mathbf{x})}{\partial \nu_2}\right|_{\mathbf{x}=\mathbf{x}_0} \cdot (\nu_{2,n} - \nu_{2,0}) + \left.\frac{\partial \mathbf{h}(\mathbf{x})}{\partial \dot{\nu}_2}\right|_{\mathbf{x}=\mathbf{x}_0} \cdot (\dot{\nu}_{2,n} - \dot{\nu}_{2,0}) + \left.\frac{\partial \mathbf{h}(\mathbf{x})}{\partial l}\right|_{\mathbf{x}=\mathbf{x}_0} \cdot (l_n - l_0) \\ &+ \sum_{k=1}^{K} \left( \left.\frac{\partial \mathbf{h}(\mathbf{x})}{\partial N^k}\right|_{\mathbf{x}=\mathbf{x}_0} \cdot (N_n^k - N_0^k) \right), \end{aligned} \qquad (80)$$

where the partial derivatives are given in (68)-(72) in closed form, and can be stacked into a single matrix:

$$\mathbf{H}_n = \left[ \frac{\partial \mathbf{h}}{\partial \nu_{1,n}} \quad \frac{\partial \mathbf{h}}{\partial \dot{\nu}_{1,n}} \quad \frac{\partial \mathbf{h}}{\partial \nu_{2,n}} \quad \frac{\partial \mathbf{h}}{\partial \dot{\nu}_{2,n}} \quad \frac{\partial \mathbf{h}}{\partial l} \quad \frac{\partial \mathbf{h}}{\partial \mathbf{N}^1} \cdots \frac{\partial \mathbf{h}}{\partial \mathbf{N}^K} \right]. \tag{81}$$

This linearization of $\mathbf{h}_n(\mathbf{x}_n)$ enables the solution of (78) in closed form:

$$\mathbf{K}_n = \mathbf{P}_{\hat{\mathbf{x}}_n^-} \mathbf{H}_n^T \left( \mathbf{H}_n \mathbf{P}_{\hat{\mathbf{x}}_n^-} \mathbf{H}_n^T + \mathbf{\Sigma}_n \right)^{-1}, \tag{82}$$

where $\Sigma_n$ denotes the covariance matrix of the measurement noise $\mathbf{v}_n$.

The benefit of Gaussian a priori knowledge for the Kalman filter based estimation of ambiguities and baseline shall now be analyzed for inland water navigation. In this case, the rate of pitch $\dot{v}_{1,n}$ becomes negligible and, thus, is set to 0 and excluded from the state space vector. We process 5 Hz single frequency code and carrier phase measurements, which are grouped in blocks of s = 5 epochs to make the rate of the heading observable. The single difference unit vectors $\Delta\mathbf{e}_n^k$ are computed from a snapshot of 8 visible satellites as observable at Advanced Navigation Solutions - ANAVS once the full Galileo 27/3/1 Walker constellation becomes operational. The assumptions of the baseline, measurement and process noises, and of the a priori knowledge are summarized in Table 1, and are considered typical for inland water navigation with low cost receivers. The uncertainty in the baseline length arises from a non perfect coupling of cargo ships and/or antenna phase center variations.

Figure 10 shows the convergence of the constrained a posteriori float ambiguity estimates for $\sigma_l$= 5 *cm* but no a priori knowledge about the pitch angle ($\sigma_l$= 5*cm*, $\sigma_{\overline{v}_1} = \infty$). In this case, it takes 140 s until all float ambiguity estimates are at most 0.1 cycles apart from an integer number. The reduction of the float ambiguity errors within this time span clearly indicates the benefit of the state space model and a Kalman filter.

Figure 11 shows the convergence process of the constrained a posteriori baseline parameters for the same simulation scenario. The estimate of $v_1$ is much more noisy than the one of $v_2$, which is a consequence of the geometry: The sensitivity of the cost function *C* w.r.t. $v_{1,n}$ at $v_{1_0}$ = 2° is much smaller than the sensitivity w.r.t. $v_{2,n}$ at $v_{2_0}$ = 45°, which results in a noisier estimate. One can also observe the process noise after the convergence is reached.

Figure 12 and 13 show the benefit of an improved a priori knowledge of the pitch angle ($\sigma_l$= 5*cm*, $\sigma_{\overline{v}_1}$ = 0.1°). The reduction of the uncertainty to $\sigma_{\overline{v}_1}$ = 0.1° (which corresponds to a length uncertainty of 17.4 cm for *l* = 100*m*) substantially shortens the convergence process, and enables reliable float ambiguities and baseline estimates within less than 10 epochs (i.e. 2s).

#### 4.2.4 Improving accuracy and reliability with multi-frequency linear combinations

The reliability of carrier phase positioning can be further improved if a multi-frequency linear combination of ambiguities is resolved instead of the individual carrier phase ambiguities. This can be explained by the increase in the combination wavelength, which improves the conditioning of the equation system and, thereby, improves the accuracy of the float solution.

In [5]-[7], Henkel et al. optimized a class of multi-frequency linear combinations that include both code and carrier phase measurements with phase coefficients $\alpha_m$ and code coefficients $\beta_m$, i.e.

$$\lambda\phi^k = \sum_{m=1}^{M} \left( \alpha_m \lambda_m \phi_m^k + \beta_m \rho_m^k \right), \tag{83}$$

where $m$ = {1,...,$M$} denotes the frequency index. The code and carrier phase measurements can be assumed statistically independent, such that the standard deviation of the combination noise is given by

$$\sigma = \sqrt{\sum_{m=1}^{M} \left( \alpha_m^2 \sigma_{\phi_m}^2 + \beta_m^2 \sigma_{\rho_m}^2 \right)} \tag{84}$$

which depends on the code and phase noise variances. Here the code noise standard deviations are set to the Cramer Rao lower bound. It is given in Table 2 for the GPS signals on L1, L2 and L5 at a carrier to noise power ratio of 45 dB-Hz.

The linear combination shall scale the geometry term by a certain predefined factor $h_1$, i.e.

$$\sum_{m=1}^{M}(\alpha_m+\beta_m)\overset{!}{=}h_1, \tag{85}$$

where $h_1$ = 0 corresponds to a geometry-free and $h_1$ = 1 to a geometry-preserving combination. Similarly, the combined first order ionospheric delay shall be scaled by a predefined value $h_2$, i.e.

$$\sum_{m=1}^{M}(\alpha_m-\beta_m)q_{1m}^2\overset{!}{=}h_2, \tag{86}$$

where the minus sign arises from the code carrier divergence. Moreover, the linear combination of ambiguities shall correspond to a single wavelength times a single integer ambiguity:

$$\sum_{m=1}^{M}(\alpha_m\lambda_m N_m)\overset{!}{=}\lambda N. \tag{87}$$

Equation (87) is equivalent to

$$N=\sum_{m=1}^{M}\underbrace{\frac{\alpha_m\lambda_m}{\lambda}}_{\overset{!}{=}j_m\in\mathbb{Z}}N_m. \tag{88}$$

Finally, the remaining degrees of freedom shall be used to maximize the ambiguity discrimination which was introduced in [5] as the ratio between the combination wavelength and the doubled standard deviation of the combination noise, i.e.

$$D=\frac{\lambda}{2\sigma}. \tag{89}$$

The ambiguity discrimination of (89) shall be maximized over $\lambda$ and over all $j_m$ and $\beta_m$, i.e.

$$\max_{j_1,\ldots,j_M,\lambda,\beta_1,\ldots,\beta_M} D, \tag{90}$$

which includes a numerical search and an analytical computation as described in details in [7]. The result of this optimization was derived for Galileo by Henkel and Günther in [5]-[7]. For GPS with its new signals, it is given in Table 3.

It should be noted that these combinations can also be used for the method described in section 3.

### 4.3. Estimation of ambiguities and baselines with uniformly distributed a priori information

In this section, the inequality constrained estimation 33 is described in detail.

The MAP estimator described in the previous section enables a substantial improvement in ambiguity fixing as it benefits from an a priori known Gaussian probability distribution of the baseline parameters. However, if this information is erroneous or unavailable, inequality constraints can be an attractive alternative and lead to the minimization

$$\min_{\nu_1,\dot{\nu}_{1,n},\nu_{2,n},\dot{\nu}_{2,n},l_n,\mathbf{N}\in Z^K} \|\mathbf{z}_n - \mathbf{h}_n(\nu_{1,n},\dot{\nu}_{1,n},\nu_{2,n},\dot{\nu}_{2,n},l_n,\mathbf{N})\|^2_{\Sigma_n^{-1}}$$

$$\begin{aligned} s.t.\quad & \nu_{1,\min} \le \nu_{1,n} \le \nu_{1,\max}, \qquad \dot{\nu}_{1,\min} \le \dot{\nu}_{1,n} \le \dot{\nu}_{1,\max} \\ & \nu_{2,\min} \le \nu_{2,n} \le \nu_{2,\max}, \qquad \dot{\nu}_{2,\min} \le \dot{\nu}_{2,n} \le \dot{\nu}_{2,\max} \\ & l_{\min} \le l_n \le l_{\max}, \end{aligned} \qquad (91)$$

which can also be regarded as uniform distributions. The inequality constrained ambiguity resolution can be approximated by an unconstrained optimization problem, i.e.

$$\min_{\nu_1,\dot{\nu}_{1,n},\nu_{2,n},\dot{\nu}_{2,n},l_n,\mathbf{N}\in Z^K} \Bigg( \|\mathbf{z}_n - \mathbf{h}_n(\nu_{1,n},\dot{\nu}_{1,n},\nu_{2,n},\dot{\nu}_{2,n},l_n,\mathbf{N})\|^2_{\Sigma_n^{-1}} + \sum_{x=1}^{2} f(\nu_{x,n},\nu_{x,\min},\nu_{x,\max}) + \sum_{x=1}^{2} f(\dot{\nu}_{x,n},\dot{\nu}_{x,\min},\dot{\nu}_{x,\max}) + f(l_n,l_{\min},l_{\max}) \Bigg), \qquad (92)$$

with the barrier function

$$f(x,x_{\min},x_{\max}) = \begin{cases} t\cdot(x_{\min}-x)^h & x < x_{\min}, \\ 0 & x_{\min} \le x \le x_{\max}, \\ t\cdot(x-x_{\max})^h & x > x_{\max}, \end{cases} \qquad (93)$$

with penalty factor $t$ and $h \geq 3$. This barrier function is second order continuously differentiable so that the minimization of equation (92) can be again solved iteratively with the Newton method. For $t \to \infty$, equation (92) becomes equivalent to equation (91).

Figure 14 shows the benefit of the inequality constraints for float ambiguity estimation as a function of the tightness of the bounds. For example, restricting the elevation angle to an interval of $\delta v_1 = v_{1,\max} - v_{1,\min} = 10°$, reduces the uncertainty in the float ambiguity estimates by a factor two compared to $\delta v_1 = 50°$. Thus, the inequality constraints enable a more precise float solution, whereas the benefit increases with the tightness of the uniform distribution.

**5. Integer fixing with inequality constrained baseline length and attitude: Sequential estimation and Search tree**

In this section the search 21 of Figure 3 and the search of Figure 34 is described in detail.

The float ambiguities shall be fixed to integers with a tree search as shown in Figure 15. In the search tree, constraints on the baseline length and orientation are checked at each path node to reduce the final number of branches. The tightness of the bounds and, thus, the efficiency of the search, is determined by the prefactors $\mu_l$, $\mu_{v_1}$ and $\mu_{v_2}$.

The efficiency of a brute force search is substantially improved by some constraints on the length and direction of the baseline. The following notation shall be introduced for the tree search: The level in vertical direction is denoted by $k \in \{1,...,K\}$ corresponding to the ambiguity indices, $j_k \in \{1,...,c^k\}$ represents the path number at the $k$-th level, and $c_k$ is the number of paths at the $k$ -th level. The set of integer candidates at level $k$ is denoted by $s^k = \{\breve{N}_1^k,\ldots,\breve{N}_{c_k}^k\}$.

The search aims on finding all integer vectors **N** that lie inside a certain volume $\chi^2$, i.e. that fulfill $\|\hat{\mathbf{N}} - \mathbf{N}\|^2_{\Sigma_{\hat{\mathbf{N}}}^{-1}} \le \chi^2$, which can also be written in sequential form as

$$|N^k - \hat{N}^k_{j_k|j_1,\ldots,j_{k-1}}| \le \sigma_{\hat{N}_{k|1,\ldots,k-1}} \sqrt{\chi^2 - \sum_{l=1}^{k-1} \frac{\left(\breve{N}^l_{j_l} - \hat{N}^l_{j_l|j_1,\ldots,j_{l-1}}\right)^2}{\sigma^2_{\hat{N}_{l|1,\ldots,l-1}}}}, \qquad (94)$$

where the conditional ambiguity estimates $\hat{N}^l_{j_l|j_1,\ldots,j_{l-1}}$ are determined by classical bootstrapping and, obviously depend on the path from $j_1$ to $j_{l-1}$. The standard deviations $\sigma^2_{\hat{N}_{l|1,\ldots,l-1}}$ are also known from bootstrapping and do only depend on the levels but not on the individual path. Equation (94) provides a lower and upper bound for the fixing of $N^k$ at path number $j_k$:

$$u_{\breve{N}^k_{j_k}} = \hat{N}_{j_k|j_1,\ldots,j_{k-1}} - \sigma_{\hat{N}_{j_k|j_1,\ldots,j_{k-1}}} \cdot \sqrt{\chi^2 - \sum_{l=1}^{k-1} \frac{\left(\breve{N}^l_{j_l} - \hat{N}^l_{j_l|j_1,\ldots,j_{l-1}}\right)^2}{\sigma^2_{\hat{N}_{l|1,\ldots,l-1}}}}$$

$$o_{\breve{N}^k_{j_k}} = \hat{N}_{j_k|j_1,\ldots,j_{k-1}} + \sigma_{\hat{N}_{j_k|j_1,\ldots,j_{k-1}}} \cdot \sqrt{\chi^2 - \sum_{l=1}^{k-1} \frac{\left(\breve{N}^l_{j_l} - \hat{N}^l_{j_l|j_1,\ldots,j_{l-1}}\right)^2}{\sigma^2_{\hat{N}_{l|1,\ldots,l-1}}}}, \qquad (95)$$

where the dependency on the previous path numbers $j_1,\ldots j_{k-1}$ has been omitted to simplify notation. The tree is constructed sequentially with (95) and the total number of paths $c^K$ is reduced by some constraints on the baseline estimate. The latter one is given for path number $j_k$ by

$$\begin{bmatrix} \breve{\hat{\boldsymbol{\xi}}}_{j_1,\ldots,j_k} \\ \breve{\hat{\mathbf{N}}}_{j_1,\ldots,j_k} \end{bmatrix} = \left(\left[\mathbf{H}\ \mathbf{P}^k\mathbf{A}\right]^T \boldsymbol{\Sigma}^{-1} \left[\mathbf{H}\ \mathbf{P}^k\mathbf{A}\right]\right)^{-1}$$

$$\left[\mathbf{H}\ \mathbf{P}^k\mathbf{A}\right]^T \boldsymbol{\Sigma}^{-1} \left(\boldsymbol{\Psi} - \bar{\mathbf{P}}^k\mathbf{A}\begin{bmatrix} \breve{N}_{j_1} \\ \vdots \\ \breve{N}_{j_k} \end{bmatrix}\right), \qquad (96)$$

where the selection matrices $\mathbf{P}^k$ and $\bar{\mathbf{P}}^k$ are defined as

$$\mathbf{P}^k = \begin{bmatrix} \mathbf{1}^{k\times k} \\ \mathbf{0}^{K-k\times k} \end{bmatrix}$$

$$\bar{\mathbf{P}}^k = \begin{bmatrix} \mathbf{0}^{k\times K-k} \\ \mathbf{1}^{K-k\times K-k} \end{bmatrix}. \qquad (97)$$

It should be noted that in equation (96), $\Psi$ must be replace by $\mathbf{z}_n$, if the search method described in this section is used for the search 34 of Figure 8. It should further be noted that equation (96) corresponds to the MAP estimation 35 of Figure 8.

The notation ($\breve{\hat{\cdot}}$) has been introduced to denote partial fixing. The spherical baseline parameters can be easily obtained from the cartesian estimates:

$$\breve{\hat{l}}\left(\breve{N}_{j_1}^1,\ldots,\breve{N}_{j_k}^k\right)=\sqrt{\breve{\hat{\xi}}_{x_{j_1,\ldots,j_k}}^2+\breve{\hat{\xi}}_{y_{j_1,\ldots,j_k}}^2+\breve{\hat{\xi}}_{z_{j_1,\ldots,j_k}}^2}$$

$$\breve{\hat{\nu}}_1\left(\breve{N}_{j_1}^1,\ldots,\breve{N}_{j_k}^k\right)=\arctan\left(\frac{\breve{\hat{\xi}}_{z_{j_1,\ldots,j_k}}}{\sqrt{\breve{\hat{\xi}}_{x_{j_1,\ldots,j_k}}^2+\breve{\hat{\xi}}_{y_{j_1,\ldots,j_k}}^2}}\right)$$

$$\breve{\hat{\nu}}_2\left(\breve{N}_{j_1}^1,\ldots,\breve{N}_{j_k}^k\right)=\arctan\left(\frac{\breve{\hat{\xi}}_{y_{j_1,\ldots,j_k}}}{\breve{\hat{\xi}}_{x_{j_1,\ldots,j_k}}}\right). \qquad (98)$$

The uncertainty of these parameters can be derived from the covariance matrix

$$\Sigma_{\begin{bmatrix}\breve{\hat{\xi}}\\ \breve{\hat{N}}\end{bmatrix}}=\begin{bmatrix}\boldsymbol{\Sigma}_{\breve{\hat{\xi}}}^k & \boldsymbol{\Sigma}_{\breve{\hat{\xi}}\breve{\hat{N}}}\\ \boldsymbol{\Sigma}_{\breve{\hat{N}}\breve{\hat{\xi}}} & \boldsymbol{\Sigma}_{\breve{\hat{N}}}\end{bmatrix}$$

$$=\left(\left[\mathbf{H}\ \mathbf{P}^k\mathbf{A}\right]^T\boldsymbol{\Sigma}^{-1}\left[\mathbf{H}\ \mathbf{P}^k\mathbf{A}\right]\right)^{-1} \qquad (99)$$

which leads to

$$\sigma_{\breve{\hat{l}}^k}=\sqrt{\mathrm{trace}\left(\boldsymbol{\Sigma}_{\breve{\hat{\xi}}^k}\right)}. \qquad (100)$$

The angle estimates $\breve{\hat{\nu}}_1^k$ and $\breve{\hat{\nu}}_2^k$ are not Gaussian distributed. Consequently, the standard deviations have to be determined by Monte-Carlo simulations from equation (98). The results could be stored in a look-up table for realtime applications.

Equations (98) to (100) are the basis for the constraints on the baseline length and orientation given by

$$|\,\breve{\hat{l}}\left(\breve{N}_{j_1}^1,\ldots,\breve{N}_{j_K}^K\right)-\bar{l}\,|\leq\mu_l\cdot\sigma_{\breve{\hat{l}}^k} \qquad (101)$$

and

$$|\,\breve{\hat{\nu}}_1\left(\breve{N}_{j_1}^1,\ldots,\breve{N}_{j_K}^K\right)-\bar{\nu}_1\,|\leq\mu_{\nu_1}\cdot\sigma_{\breve{\hat{\nu}}_1^k}$$

$$|\,\breve{\hat{\nu}}_2\left(\breve{N}_{j_1}^1,\ldots,\breve{N}_{j_K}^K\right)-\bar{\nu}_2\,|\leq\mu_{\nu_2}\cdot\sigma_{\breve{\hat{\nu}}_2^k}. \qquad (102)$$

The prefactors $\mu_l$, $\mu_{v_1}$ and $\mu_{v_2}$ were introduced to control the tightness of the bounds and are constant over all levels. On the contrary, the standard deviations $\sigma_{\tilde{l}^k}$, $\sigma_{\tilde{v}_1^k}$ and $\sigma_{\tilde{v}_2^k}$ reduce with increasing levels due to a larger number of fixed integer ambiguities.

Figure 16 shows the number of paths as a function of prefactor $\mu_l$ for each level *k*. The benefit of tightening the constraint increases with the level *k*, i.e. the number of paths is reduced by only one order of magnitude for the first level but by three orders of magnitude at the last level. Thus, the constraint reduces the number of paths by several orders of magnitude.

For $\mu_l \dashrightarrow \infty$, the number of paths converges to the number of paths of unconstrained ambiguity resolution. The simulation result refers to the estimation of the E1-E5 Galileo widelane ambiguities with wavelength of 78 cm for a geometry with 8 visible satellites and measurements from 5 epochs.

**6. Test Set-up**

In this section, the integer ambiguity resolution shall be verified with real measurements from two PolaRx3G Galileo receivers of Septentrio. The two receivers were connected to two NavX multi-frequency Galileo signal generators of IFEN GmbH, which generate high frequency signals. The transmit power was set such that the average carrier to noise power ratio was 48 dB-Hz. The Galileo receivers continuously tracked the E1 and E5a signals over 30 minutes. The baseline length was fixed to 30 m.

Figure 17 is a diagram showing float estimates of the Galileo E1-E5a widelane ambiguities on a single epoch basis: The estimates are unbiased and the noise is significantly lower than one cycle.

Figure 18 is a diagram showing range residuals after widelane integer ambiguity resolution: The residuals of all widelane combinations are nearly unbiased and the noise level can be derived from the measurement noise and its amplification by double differencing, by the widelane combination and by the dilution of precision.

Figure 17 and 18 show that both the range residuals and the widelane float ambiguity estimates are unbiased. The noise in the float ambiguity estimates is significantly lower than one cycle, which indicates an extremely reliable integer ambiguity resolution. The range residuals are Gaussian distributed and refer to the fixed ambiguity solution. Their standard deviations vary around 1 cm, which can be explained from the 1 mm phase noise by its amplification due to double differencing (factor 2), widelaning (factor 4.1) and the dilution of precision.

**7. Advantages**

The reliability of the resolution of this ambiguity is often not sufficient due to the the small carrier wavelength of 19 cm and multipath. Instead of improving the reliability of integer least-squares estimation by multi-frequency widelane combinations that increase the wavelength to several meters, and the method described herein uses constraints on the length and orientation of the baseline which reduce the size of the search space.

In particular, a maximum a posteriori probability estimator was derived for the estimation of the baseline with both tight and soft constraints on the baseline length and orientation. The integer least-squares estimator uses a priori information on the length and orientation of the baseline to improve the ambiguity resolution and also ensures a sufficient robustness with respect to uncertainties in the a priori information.

This a priori information can be provided either as a Gaussian distribution or as a uniform distribution. The estimation includes a sequential construction of a search tree and an iterative solution with the Newton algorithm. The proposed algorithm has two advantages over unconstrained fixings: first, it reduces the number of paths in the search tree by several orders of magnitude. Secondly, the probability of wrong fixing is reduced but also the robustness over errors in the a priori information is substantially increased.

The methods described herein can be applied to multi-frequency combinations that increase the wavelength and, thereby, further improve the reliability of integer ambiguity resolution. The methods can be used for any application where a precise and reliable relative position estimate is required and some a priori knowledge on the baseline length and/ or orientation is available. The method opens up new opportunities for applications such as freight stabilization on cranes and helicopters or attitude determination of aircrafts. In all these applications, the length and orientation are constrained but not fixed.

Two approaches for soft constrained integer least-squares estimation were suggested: The first one includes a priori information on the length of the baseline and its orientation (attitude) in the form of Gaussian distributions. The second one includes the a priori information by inequality constraints on the length and orientation. This information could come from physical constraints (e.g. gravity) or other sensors. Both approaches are solved iteratively with the Newton method.

The benefit of the a priori information depends on its variance or on the tightness of the inequality constraints.

It has been shown that the new methods reduce the probability of wrong fixing with respect to unconstrained integer least-squares estimation by more than one order of magnitude even if the a priori information on the length is biased by 1 m.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

## References

[1] P. Teunissen, The least-squares ambiguity decorrelation adjustment: a method for fast GPS ambiguity estimation, J. of Geodesy, vol. 70, pp. 65-82, 1995.

[2] R. Mönikes, J. Wendel and G. Trommer, A modified LAMBDA method for ambiguity resolution in the presence of position domain constraints, Proc. of ION GPS, pp. 81-87, 2005.

[3] P. Teunissen, The LAMBDA method for the GNSS compass, Art. Satellites, vol. 41, nr. 3, pp. 89-103, 2006.

[4] P. Teunissen, Integer least-squares theory for the GNSS compass, J. of Geodesy, vol. 84, pp. 433-447, 2010.

[5] P. Henkel and C. Günther, Joint L-/C-Band Code and Carrier Phase Linear Combinations for Galileo, Int. J. ofNav. and Obs., Article ID 651437, 8 pp., 2008.

[6] P. Henkel, Bootstrapping with Multi-Frequency Mixed Code Carrier Linear Combinations and Partial Integer Decorrelation in the Presence of Biases, Proc. of Int. Assoc. of Geod. Scient. Ass., Buenos Aires, Argentina, 2009.

[7] P. Henkel and C. Günther, Reliable Carrier Phase Positioning with Multi-Frequency Code Carrier Linear Combinations, Proc. of 23rd ION Intern. Techn. Meet. (ION-GNSS), Portland, USA, 2010.

[8] P. Jurkowski, Baseline constrained ambiguity resolution with multiple frequencies, Bachelor thesis, Technische Universität München, 49 pp., 2010.


Tab. 1: Simulation scenario for inland water navigation

| | |
|---|---|
| Initial baseline | $l_0 = 100m$, $v_{1,0} = 2°$, $v_{2,0} = 45°$, $\dot{v}_{2,0} = 1° / s$ |
| Measurement noise | $\sigma_\varphi = 1cm$, $\sigma_\rho = 1m$ |
| Process noise | $\sigma_{v_1} = 0.001°$, $\sigma_{\dot{v}_2} = 0.03° / \delta t$, $\sigma_l = 0$, $\delta t = 0.2s$ |
| Baseline a priori knowledge<br>Length<br>Pitch angle, Figure 6<br>Pitch angle, Figure 7 | <br>$\sigma_{\overline{l}} = 5cm$<br>$\sigma_{\overline{v}_1} = \infty$<br>$\sigma_{\overline{v}_1} = 0.1°$ |

Tab. 2: Cramer Rao bounds for GPS signals on L1, L2 and L5 at $C / N_0 = 45dB - Hz$

| | Signal | BW [MHz] | *CRB* [cm] |
|---|---|---|---|
| L1-I | BPSK(1), C/A | 2·1.023 | 78.29 |
| L1-I | BPSK(1), C/A | 20·1.023 | 25.92 |
| L1-C | MBOC, OS | 20·1.023 | 11.13 |
| L2-C | BPSK(1), OS | 20·1.023 | 25.92 |

(continued)

| | Signal | BW [MHz] | *CRB* [cm] |
|---|---|---|---|
| L5-I | BPSK(10), OS | 20·1.023 | 7.83 |
| L5-Q | BPSK(10), OS | 20·1.023 | 7.83 |

Tab. 3: Triple-frequency code carrier widelane combinations of maximum discrimination for $\sigma_\phi = 1mm$ and $\sigma_{\rho m} = CRB_m$

| $h_1$ | $h_2$ | L1 | | L2 | | L5 | | $\lambda$ | $\sigma$ | $D$ |
|---|---|---|---|---|---|---|---|---|---|---|
| 1 | 0 | $j_1$ | 1 | $j_2$ | -5 | $j_3$ | 4 | | | |
| | | $\alpha_1$ | 18.5659 | $\alpha_2$ | -72.3348 | $\alpha_3$ | 55.4567 | 3.533 m | 10.3 cm | 17.17 |
| | | $\beta_1$ | -0.1394 | $\beta_2$ | -0.0424 | $\beta_3$ | -0.5060 | | | |
| 1 | -0.1 | $j_1$ | 1 | $j_2$ | -5 | $j_3$ | 4 | | | |
| | | $\alpha_1$ | 17.3827 | $\alpha_2$ | -67.7249 | $\alpha_3$ | 51.9224 | 3.308 m | 9.5 cm | 17.46 |
| | | $\beta_1$ | -0.1132 | $\beta_2$ | -0.0359 | $\beta_3$ | -0.4311 | | | |
| 0 | -1 | $j_1$ | -1 | $j_2$ | 5 | $j_3$ | -4 | | | |
| | | $\alpha_1$ | -12.5565 | $\alpha_2$ | 48.9213 | $\alpha_3$ | -37.5063 | 2.389 m | 9.5 cm | 12.60 |
| | | $\beta_1$ | 0.3557 | $\beta_2$ | 0.0657 | $\beta_3$ | 0.7201 | | | |
| 0 | 0 | $j_1$ | 0 | $j_2$ | -1 | $j_3$ | 1 | | | |
| | | $\alpha_1$ | 0 | $\alpha_2$ | -4.0948 | $\alpha_3$ | 3.9242 | 1 m | 1.3 cm | 38.05 |
| | | $\beta_1$ | 0.0140 | $\beta_2$ | 0.0113 | $\beta_3$ | 0.1453 | | | |

## Claims

**1.** A method for determining the relative position between two receivers (5, 6, 26, 27, 28) of a satellite navigation system, in which the receivers (5, 6, 26, 27, 28) perform phase measurements on carrier signals (9, 10, 11) of the satellite navigation system, and in which an evaluation unit uses the phase measurements for determining the relative position of the receivers (5, 6, 26, 27, 28)
**characterized in that**

- position parameters of the relative position are determined by a linear estimation of the position parameters and phase ambiguities from the phase measurements without considering the integer property of the phase ambiguities, that
- candidates of integer phase ambiguities are searched around the linear estimates of the phase ambiguities using a priori information about the length and orientation of a baseline (7) extending between the two receivers (5, 6, 26, 27, 28), that
- for each candidate of integer phase ambiguities associated candidate position parameters of the relative position are determined, which are maximizing an a-posteriori-probability for the position parameters using phase measurements and a priori information about the length and orientation of the baseline (7) extending between the two receivers (5, 6, 26, 27, 28)), and that
- final integer phase ambiguities and position parameters associated with the final integer phase ambiguities are selected from the candidates of integer phase ambiguities and associated candidate position parameters by evaluating a final cost function, which is arranged for evaluating the deviation of the candidate integer phase ambiguities from the linear estimates of the integer phase ambiguities and the deviation of the position parameters associated with the candidate phase ambiguities from the linear estimates of the position parameters.

**2.** The method according to Claim 1,

wherein the candidate integer phase ambiguities are determined by using a search tree, whose branches represent different candidates of integer phase ambiguities, and wherein branches comprising integer phase ambiguities associated with position parameters beyond probability limits are excluded.

**3.** The method according to Claim 2,
wherein the probability limits are adjustable by a predetermined factor.

**4.** The method according to any one of Claims 1 to 3,
the a-posteriori-probability of the position parameters contains the probability distributions of the phase measurements under the condition of given position parameters, the probability distribution of the position parameters and the probability of the phase measurements.

**5.** The method according to Claim 4,
wherein the probability distributions are Gaussian probability distributions or uniform distributions.

**6.** The method according to Claim 5,
wherein the a-posteriori-probability of the position parameters is maximized by minimizing an intermediate cost function containing a squared norm of the deviation of the phase measurement values associated with the position parameters and the candidate integer phase ambiguities from actual phase measurements and further containing a squared norm of the deviation of the position parameters from expectation values of the position parameters.

**7.** The method according to Claim 6,
wherein the intermediate cost function is minimized by determining the position of zero transition of a gradient of the sum by a Newton method, wherein the gradient is determined by differentiating the intermediate cost function with respect to the position parameters.

**8.** The method according to Claim 6 or 7,
wherein the intermediate cost function contains measurements form different epochs.

**9.** The method according to any one of Claims 1 to 8,
wherein the final cost function contains the squared norm of the deviation of the candidate integer phase ambiguities from the linear estimates of the integer phase ambiguities and a further squared norm for the deviation of the position parameters associated with the candidate phase ambiguities from the linear estimates of the position parameters.

**10.** The method according to any one of Claims 1 to 9,
wherein besides the phase measurements also code measurements are used for performing the search for candidate phase amiguities and for determining the position parameters.

**11.** The method according to any one of Claims 1 to 10,
wherein a linear combination of phase measurements is used and wherein the phase ambiguities of the linear combination are determined.

**12.** The method according to any one of Claims 1 to 11,
wherein the position parameters are the length of the distance and further direction parameters for determining a direction of the baseline (7) extending between the two receivers (5, 6, 26, 27, 28), wherein the position parameters are the length of the distance, the pitch angle and the heading, or wherein the position parameters are the length of the distance, the pitch angle, the heading, the change rate of the pitch angle and the change rate of the heading.

**13.** The method according to any one of Claims 1 to 12,
wherein the a-posteriori-probability of position parameters is determined by using at least one sensor which determines at least one position parameter.

**14.** Apparatus for determining the relative position between two components comprising:

- at least two receivers (5, 6, 26, 27, 28) arrangable at a distance and capable of performing phase and code measurements on signals, which the receivers (5, 6, 26, 27, 28) receive from satellites (12) of a satellite navigation system; and
- an evaluation unit arranged for determining the relative position between the receivers **characterized in that**

- the evaluation unit and the receivers (5, 6, 26, 27, 28) are adapted to perform the method according to any one of Claims 1 to 13.

**15.** Apparatus according to Claim 14,
wherein one of the receivers (6) is located on a load and the other receiver (5) is located on a device (1) holding the load (2) and wherein the position parameters determined by executing the method according to any one of Claims 1 to 13 are used as an actual value for a control unit for stabilizing the load (2).

**Patentansprüche**

**1.** Ein Verfahren zur Bestimmung der relativen Position zwischen zwei Empfängern (5, 6, 26, 27, 28) von Satellitennavigationssystemen, bei dem die Empfänger (5, 6, 26, 27, 28) Phasenmessungen aus den Trägersignalen (9, 10, 11) des Satellitennavigationssystems bestimmen, und bei dem eine Berechnungseinheit die Phasenmessungen zur Bestimmung der relativen Position zwischen den Empfängern (5, 6, 26, 27, 28) verwendet
**dadurch gekennzeichnet dass**

- Positionsparameter der relativen Position mit einer linearen Schätzung der Positionsparameter und der Mehrdeutigkeiten der Phasenmessungen ohne Berücksichtigung der ganzzahligen Eigenschaft der Mehrdeutigkeiten der Phasenmessungen bestimmt werden, dass
- Kandidaten der ganzzahligen Mehrdeutigkeiten der Phasenmessungen gesucht werden in der Umgebung der linearen Schätzwerte der Mehrdeutigkeiten der Phasenmessungen unter Verwendung von a priori Informationen über die Länge und Orientierung der Basislinie (7), die zwischen den beiden Empfängern (5, 6, 26, 27, 28) ausgespannt ist, dass
- für jeden Kandidaten der ganzzahligen Mehrdeutigkeiten der Phasenmessungen die zugeordneten Kandidaten der Positionsparameter der relativen Positionen bestimmt werden, die eine a-posteriori Wahrscheinlichkeit der Positionsparameter bei gegebenen Phasenmessungen und a priori Informationen über die Länge und Orientierung der Basislinie (7), die zwischen den beiden Empfängern (5, 6, 26, 27, 28) aufgespannt ist, maximieren, und dass
- finale ganzzahlige Mehrdeutigkeiten der Phasenmessungen und Positionsparameter, die mit den finalen ganzzahligen Mehrdeutigkeiten verbunden sind, ausgewählt werden aus den Kandidaten der ganzzahligen Mehrdeutigkeiten der Phasenmessungen und den verbundenen Kandidaten der Positionsparamater durch die Evaluierung einer Kostenfunktion, die gebildet wird zur Evaluierung der Abweichung der Kandidaten der ganzzahligen Mehrdeutigkeiten der Phasenmessungen von den linearen Schätzwerten der Mehrdeutigkeiten der Phasenmessungen und der Abweichung der Positionsparameter, die mit den Kandidaten der ganzzahligen Mehrdeutigkeiten der Phasenmessungen verbunden sind, von den linearen Schätzwerten der Positionsparameter.

**2.** Ein Verfahren nach Anspruch 1,
wobei die ganzzahligen Kandidaten der Mehrdeutigkeiten der Phasenmessungen mit einer Baum-Suche bestimmt werden, wobei die Äste die verschiedenen Kandidaten der ganzzahligen Mehrdeutigkeiten der Phasenmessungen repräsentieren, und worin Äste, die Kandidaten der ganzzahligen Mehrdeutigkeiten der Phasenmessungen verbunden mit Positionsparametern außerhalb von Wahrscheinlichkeitsgrenzen repräsentieren, ausgeschlossen werden.

**3.** Ein Verfahren nach Anspruch 2,
wobei die Wahrscheinlichkeitsgrenzen angepasst werden können mit einem vordefinierten Faktor.

**4.** Ein Verfahren nach einem der Ansprüche 1 bis 3,
wobei die a-posteriori Wahrscheinlichkeit der Positionsparameter die Wahrscheinlichkeitsverteilung der Phasenmessungen bei gegebenen Positionsparametern, die Wahrscheinlichkeitsverteilung der Positionsparameter und die Wahrscheinlichkeit der Phasenmessungen beinhaltet.

**5.** Ein Verfahren nach Anspruch 4,
wobei die Wahrscheinlichkeitsverteilungen Gauss-Verteilungen oder Gleichverteilungen sind.

**6.** Ein Verfahren nach Anspruch 5,
wobei die a-posteriori Wahrscheinlichkeit der Positionsparameter maximiert wird durch Minimierung einer Zwischen-Kostenfunktion, die die quadratische Norm der Abweichung der mit den Positionsparametern und Kandidaten der ganzzahligen Mehrdeutigkeiten verbundenen Phasenmessungen von den tatsächlichen Phasenmessungen und des Weiteren eine quadratische Norm der Abweichung der Positionsparameter von den Erwartungswerten der Positionsparameter beinhaltet.

**7.** Ein Verfahren nach Anspruch 6,
wobei die Zwischen-Kostenfunktion minimiert wird durch Bestimmung der Position des Nulldurchgangs des Gradienten der Summe mit dem Newton-Verfahren, wobei der Gradient durch Ableitung der Zwischen-Kostenfunktion nach den Positionsparametern bestimmt wird.

**8.** Ein Verfahren nach einem der Ansprüche 6 oder 7,
wobei die Zwischen-Kostenfunktion die Messungen von mehreren Zeitpunkten beinhaltet.

**9.** Ein Verfahren nach einem der Ansprüche 1 bis 8,
wobei die finale Kostenfunktion die quadratische Norm der Abweichung der Kandidaten der ganzzahligen Mehrdeutigkeiten der Phasenmessungen von den linearen Schätzwerten der ganzzahligen Mehrdeutigkeiten der Phasenmessungen und eine weitere quadratische Norm der Abweichung der mit den Kandidaten der ganzzahligen Mehrdeutigkeiten verbundenen Positionsparameter von den linearen Schätzwerten der Positionsparameter beinhaltet.

**10.** Ein Verfahren nach einem der Ansprüche 1 bis 9,
wobei neben den Phasenmessungen auch Codemessungen verwendet werden zur Suche der Kandidaten der ganzzahligen Mehrdeutigkeiten der Phasenmessungen und zur Bestimmung der Positionsparameter.

**11.** Ein Verfahren nach einem der Ansprüche 1 bis 10,
wobei eine Linearkombination der Phasenmessungen verwendet wird und wobei die Mehrdeutigkeiten der Linearkombination bestimmt werden.

**12.** Ein Verfahren nach einem der Ansprüche 1 bis 11,
wobei die Positionsparameter die Länge des Abstands und weitere Richtungsparameter zur Bestimmung der Ausrichtung der Basislinie (7), die zwischen den beiden Empfängern aufgespannt ist, sind, wobei die Positionsparameter die Länge des Abstands, und der Nick- und Gierwinkel sind, oder wobei die Positionsparameter die Länge des Abstands, der Nick- und Gierwinkel, und die Drehraten des Nick- und Gierwinkels sind.

**13.** Ein Verfahren nach einem der Ansprüche 1 bis 12,
wobei die a-posteriori Wahrscheinlichkeit der Positionsparameter durch Verwendung von mindestens einem Sensor, der mindestens einen Positionsparameter ermittelt, bestimmt wird.

**14.** Ein Apparat zur Bestimmung der relativen Position zwischen zwei Komponenten, das aus

- mindestens zwei Empfängern (5, 6, 26, 27, 28), die sich in einer Distanz anordnen lassen und befähigt sind, Phasenmessungen und Codemessungen von Signalen, die die Empfänger (5, 6, 26, 27, 28) von Satelliten von Satellitennavigationssystemen empfangen, durchzuführen, und aus
- einer Berechnungseinheit zur Bestimmung der relativen Position zwischen den Empfängern besteht,

**dadurch gekennzeichnet dass**

- die Berechnungseinheit und die Empfänger (5, 6, 26, 27, 28) verwendet werden zur Durchführung des Verfahrens nach einem beliebigen Anspruch der Ansprüche 1 bis 13.

**15.** Ein Apparat nach Anspruch 14,
wobei einer der Empfänger (6) auf einer Ladung platziert ist und der andere Empfänger auf einem Gerät (1) platziert ist, das die Ladung (2) hält und wobei die Positionsparameter, die durch Ausführung des Verfahrens nach einem beliebigen Anspruch der Ansprüche 1 bis 13 bestimmt sind, für eine Steuereinheit zur Stabilisierung der Ladung (2) verwendet werden.

## Revendications

**1.** Une méthode de détermination de la position relative entre deux récepteurs (5,6,26,27,28) d'un système de navigation par satellite, dans laquelle les récepteurs (5,6,26,27,28) réalisent des mesures de phases sur les signaux porteurs (9,10,11) du système de navigation par satellite, et dans lequel une unité d'évaluation utilise les mesures de phase pour déterminer la postion relative des récepteurs (5, 6, 26, 27, 28)
**caractérisée en ce que** :

- les paramètres de position de la position relative sont déterminés par une estimation linéaire des paramètres de position et des ambiguïtés de phases à partir des mesures de phases, sans tenir compte du caractère entier des ambiguïtés de phases, que
- les candidats pour les ambiguïtés de phases entières sont recherchés autour des estimations linéaires des ambiguïtés de phases en utilisant des données a priori concernant la longueur et l'orientation d'une ligne de base (7) s'étendant entre les deux récepteurs (5, 6, 26, 27, 28), que
- pour chaque candidat des ambiguïtés de phases entières, les paramètres de position candidats associés pour la position relative, sont déterminés de façon à maximiser une probabilité a posteriori pour les paramètres de position, en utilisant des mesures de phases et en utilisant des données a priori concernant la longueur et l'orientation de la ligne de base (7) s'étendant entre les deux récepteurs (5, 6, 26, 27, 28), et que
- les ambiguïtés de phases entières finales et les paramètres de position associés aux ambiguïtés de phases entières finales sont sélectionnés parmi les candidats des ambiguïtés de phases entières et parmi les paramètres de position candidats qui leur sont associés en évaluant une fonction de coût finale, qui est élaborée pour évaluer l'écart entre les ambiguïtés de phases entières candidates et les estimations linéaires des ambiguïtés de phases entières, et l'écart entre les paramètres de position associés aux ambiguïtés de phases candidates et les estimations linéaires des paramètres de position.

**2.** La méthode, d'après la Revendication 1,
selon laquelle les ambiguïtés de phases entières candidates sont déterminées en utilisant un arbre de recherche (« tree search »), dont les branches représentent différents candidats des ambiguités de phases entières, et selon laquelle les branches comprenant des ambiguïtés de phases associées à des paramètres de position en dehors des limites de probabilité, sont exclues.

**3.** La méthode, d'après la Revendication 1,
selon laquelle les limites de probabilité sont ajustables à l'aide d'un paramètre prédéterminé.

**4.** La méthode, d'après toute Revendication de 1 à 3,
selon laquelle la probabilité a posteriori des paramètres de position contient les distributions de probabilité des mesures de phase dans les conditions où les paramètres de position sont donnés, la distribution de probabilité des paramètres de position, et la probabilité des mesures de phase.

**5.** La méthode, d'après la Revendication 4,
selon laquelle les distributions de probabilité sont des distributions de probabilité gaussiennes ou des distributions uniformes.

**6.** La méthode, d'après la Revendication 5,
selon laquelle la probabilité a posteriori des paramètres de position est maximisée en minimisant une fonction de coût intermédiaire contenant une norme au carré de la déviation des valeurs de mesures de phases associées aux paramètres de position et les ambiguités de phase entières candidates, par rapport aux mesures de phase réelles, et contenant également une norme au carré de la déviation des paramètres de position par rapport aux valeurs attendues de ces paramètres de positions.

**7.** La méthode, d'après la Revendication 6,
selon laquelle la fonction de coût intermédiaire est minimisée en déterminant la position de transition zero d'un gradient de la somme par une méthode Newton, selon laquelle le gradient est déterminé en dérivant la fonction de coût intermédiaire en fonction des paramètres de position.

**8.** La méthode, d'après toute Revendication de 6 à 7,
selon laquelle la fonction de coût intermédiaire contient des mesures de différentes époques.

**9.** La méthode, d'après toute Revendication de 1 à 8,
selon laquelle la fonction de coût finale contient la norme au carré de la déviation entre les ambiguïtés de phases entières cadidates, et les estimations linéaires des ambiguïtés de phase entières, et contient également une norme au carré pour la déviation entre les paramètres de position associés aux ambiguités de phase candidates, et les estimations linéaires de paramètres de position.

**10.** La méthode, d'après toute Revendication de 1 à 9,
selon laquelle, outre les mesures de phase, des mesures de code sont aussi utilisées pour mener la recherche d'ambiguïtés de phase candidates et pour déterminer les paramètres de position.

**11.** La méthode, d'après toute Revendication de 1 à 10,
Selon laquelle une combinaison linéaire de mesures de phase est utilisée, et selon laquelle les ambiguïtés de phase de la combinaison linéaire sont déterminés.

**12.** La méthode, d'après toute Revendication de 1 à 11,
selon laquelle les paramètres de position sont la distance et d'autres paramètres de direction pour déterminer une direction de la ligne de base (7) s'étendant entre les deux récepteurs (5, 6, 26, 27, 28), selon laquelle les paramètres de position sont la distance, l'angle de tangage (« pitch angle »), l'angle de lacet (« heading »), ou selon laquelle les paramètres déposition sont la distance, l'angle de tangage (« pitch angle »), l'angle de lacet (« heading »), le taux de variation de l'angle de tangage, et le taux de variation de l'angle de lacet.

**13.** La méthode, d'après toute Revendication de 1 à 12,
Selon laquelle la probabilité a posteriori des paramètres de position est déterminées en utilisant au moins un capteur qui détermine au moins un parmètre de position.

**14.** Le dispositif pour la détermination de la position relative entre deux composants comprenant :

- au moins deux récepteurs (5, 6, 26, 27, 28) réglables à distance et capables de réaliser des mesures de phase et de code sur des signaux, que les récepteurs (5, 6, 26, 27, 28) reçoivent de satellites (12) d'un système de navigation par statellites ; et
- une unité d'évaluation élaborée pour déterminer la position relative entre les récepteurs **caractérisée en ce que**
- l'unité d'évaluation et les récepteurs sont adaptés pour réaliser la méthode selon toute Revendication de 1 à 13.

**15.** Le dispositif, d'après la Revendication 14,
grâce auquel un des récepteurs (6) est placé sur une charge et l'autre récepteur (5) est placé sur l'appareil (1) portant la charge (2) et selon laquelle les paramètres de position déterminés en exécutant la méthode selon toute Revendication de 1 à 13 sont utilisés comme valeurs réelles par une unité de contrôle pour stabiliser la charge (2).

FIG 1

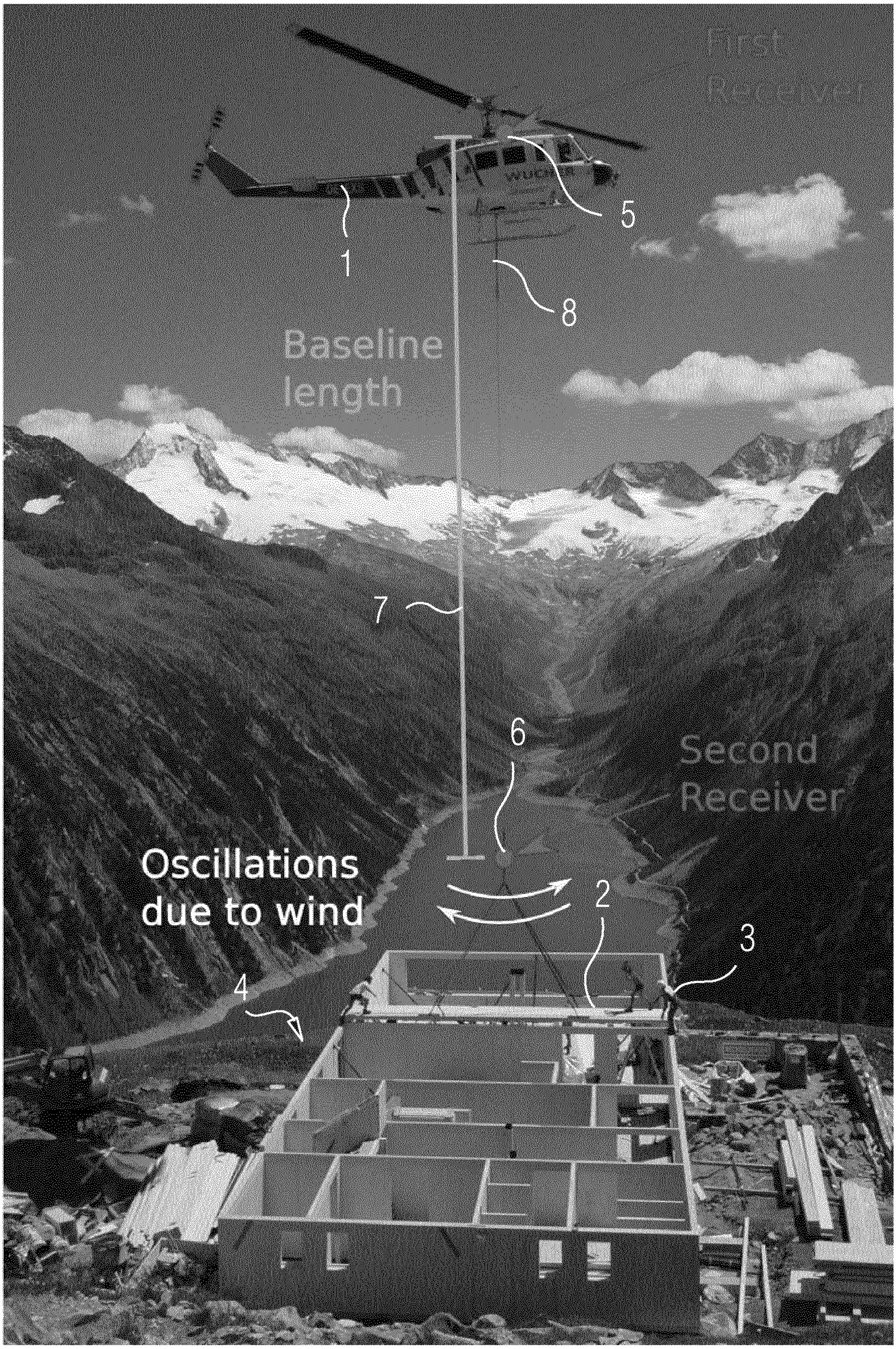
First
Receiver
5
1
8
Baseline
length
7
6
Second
Receiver
Oscillations
due to wind
2
3
4

FIG 2

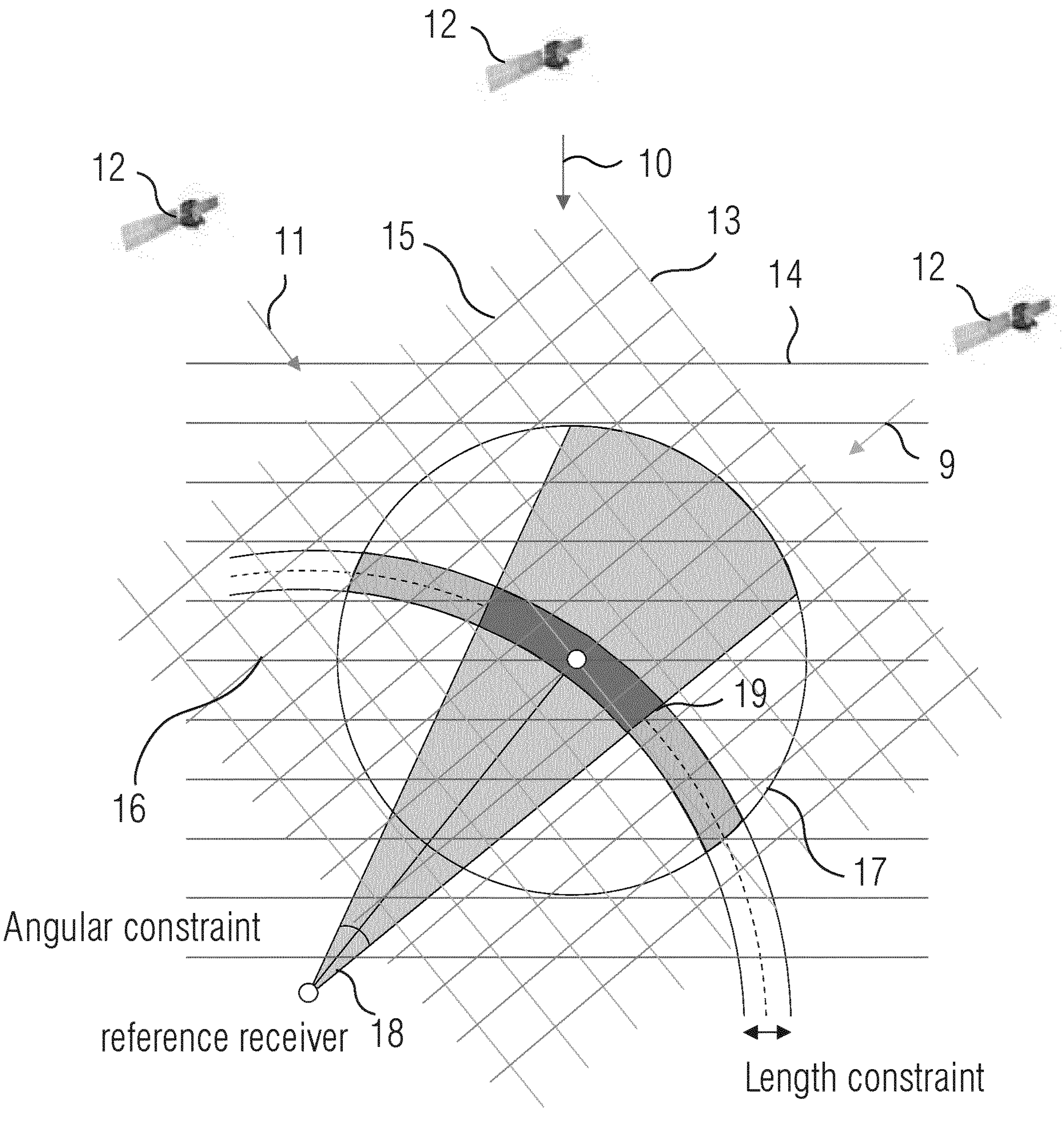
12
12
12
10
11
15
13
14
9
19
16
17
Angular constraint
reference receiver
18
Length constraint

FIG 3

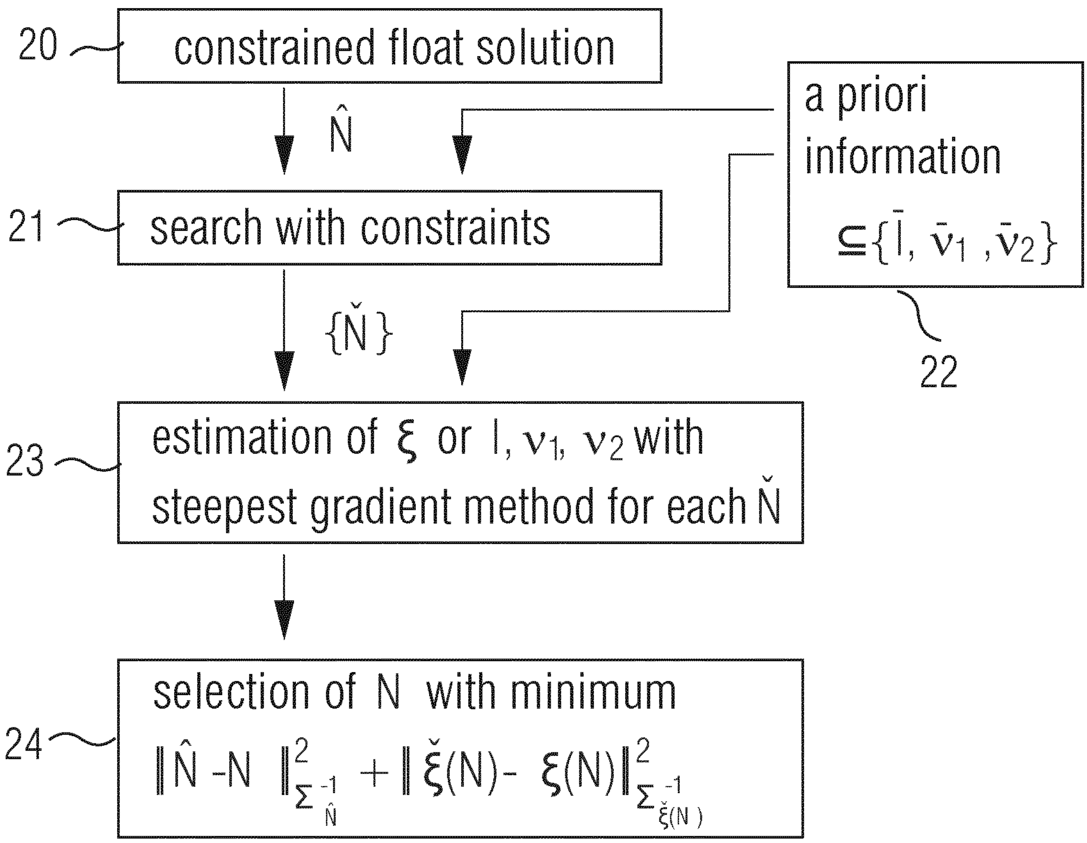
20
constrained float solution
N̂
a priori
information
⊆{l̄, ν̄1 ,ν̄2}
22
21
search with constraints
{Ň}
23
estimation of ξ or l, ν1, ν2 with
steepest gradient method for each Ň
24
selection of N with minimum
‖N̂ -N ‖²Σ⁻¹N̂ + ‖ξ̌(N)- ξ(N)‖²Σ⁻¹ξ̌(N)

FIG 4

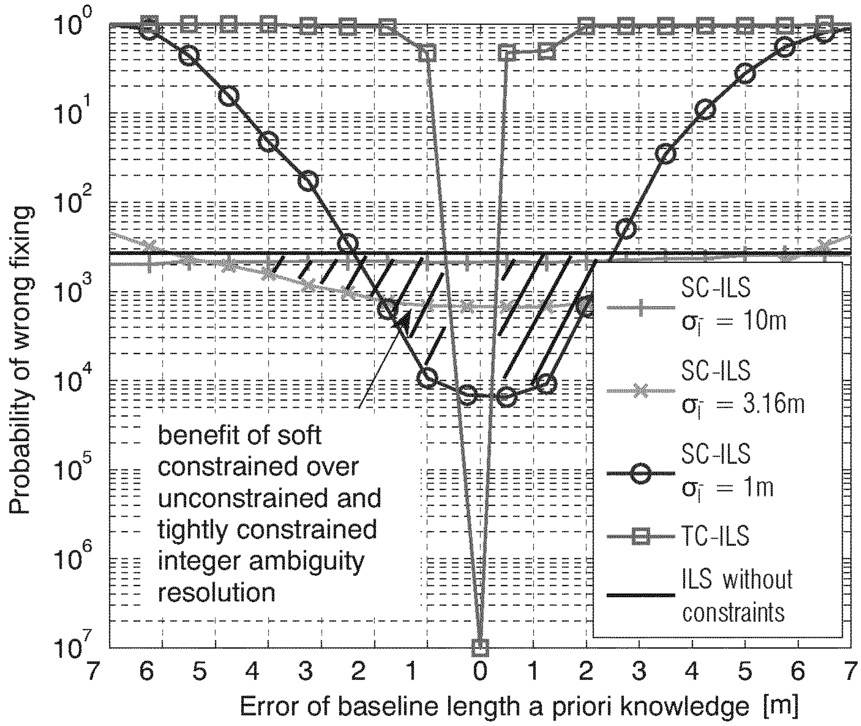

$10^{0}$
$10^{1}$
$10^{2}$
$10^{3}$
$10^{4}$
$10^{5}$
$10^{6}$
$10^{7}$
Probability of wrong fixing
7 6 5 4 3 2 1 0 1 2 3 4 5 6 7
Error of baseline length a priori knowledge [m]
benefit of soft constrained over unconstrained and tightly constrained integer ambiguity resolution
SC-ILS $\sigma_{\bar{l}}$ = 10m
SC-ILS $\sigma_{\bar{l}}$ = 3.16m
SC-ILS $\sigma_{\bar{l}}$ = 1m
TC-ILS
ILS without constraints


FIG 5

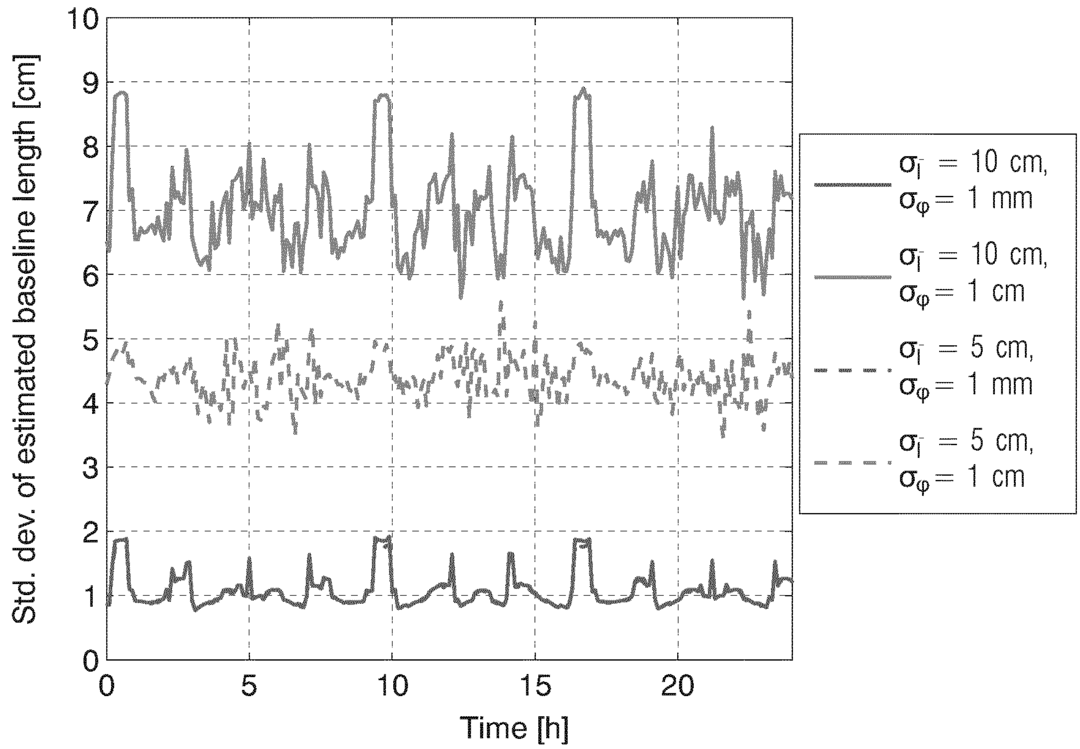

0 1 2 3 4 5 6 7 8 9 10
Std. dev. of estimated baseline length [cm]
0 5 10 15 20
Time [h]
$\sigma_{\bar{l}}$ = 10 cm, $\sigma_{\varphi}$ = 1 mm
$\sigma_{\bar{l}}$ = 10 cm, $\sigma_{\varphi}$ = 1 cm
$\sigma_{\bar{l}}$ = 5 cm, $\sigma_{\varphi}$ = 1 mm
$\sigma_{\bar{l}}$ = 5 cm, $\sigma_{\varphi}$ = 1 cm

FIG 6

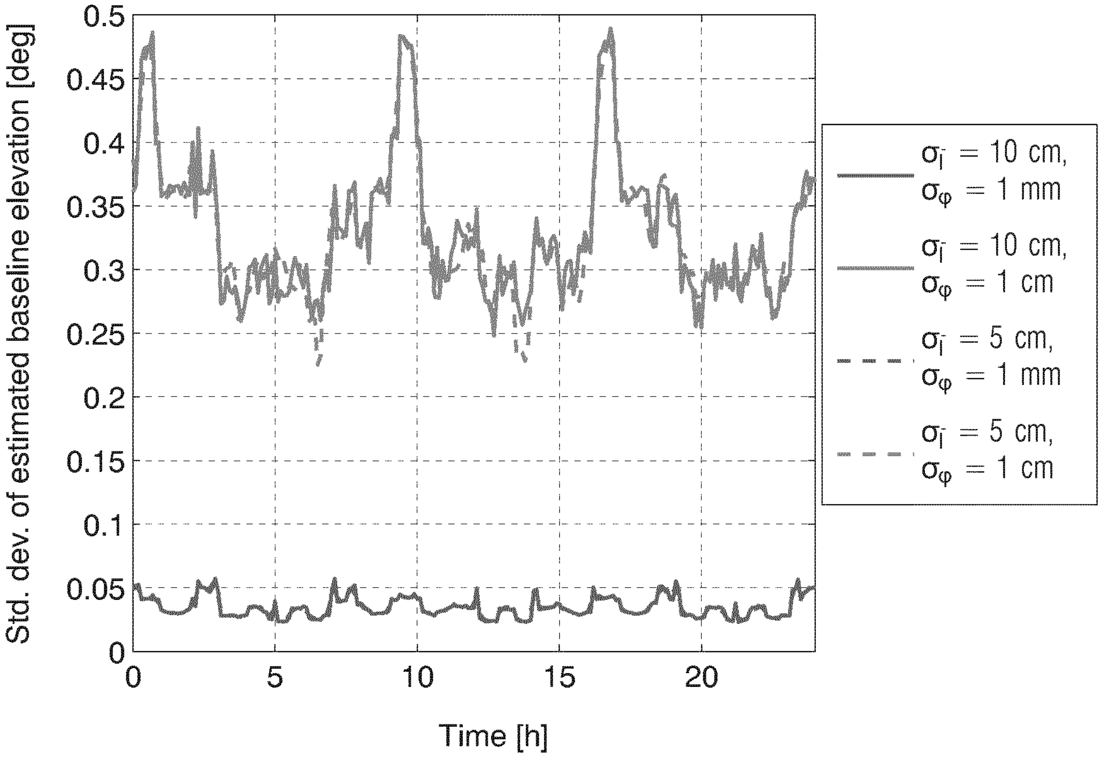
Std. dev. of estimated baseline elevation [deg]
0.5
0.45
0.4
0.35
0.3
0.25
0.2
0.15
0.1
0.05
0
0
5
10
15
20
Time [h]
$\sigma_{\bar{I}}$ = 10 cm, $\sigma_{\varphi}$ = 1 mm
$\sigma_{\bar{I}}$ = 10 cm, $\sigma_{\varphi}$ = 1 cm
$\sigma_{\bar{I}}$ = 5 cm, $\sigma_{\varphi}$ = 1 mm
$\sigma_{\bar{I}}$ = 5 cm, $\sigma_{\varphi}$ = 1 cm

FIG 7

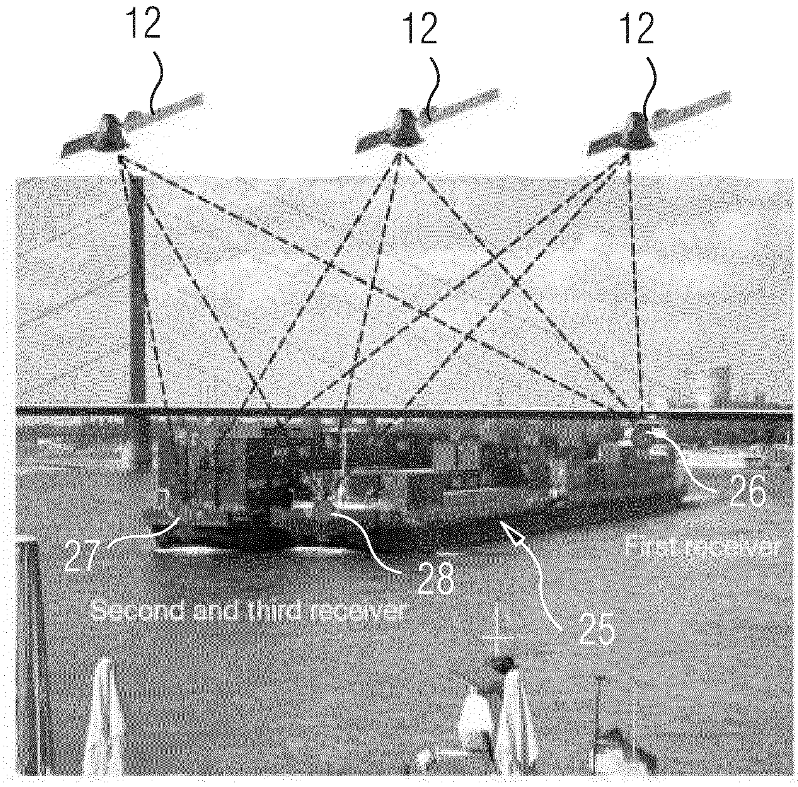
12
12
12
26
First receiver
27
28
Second and third receiver
25

FIG 8

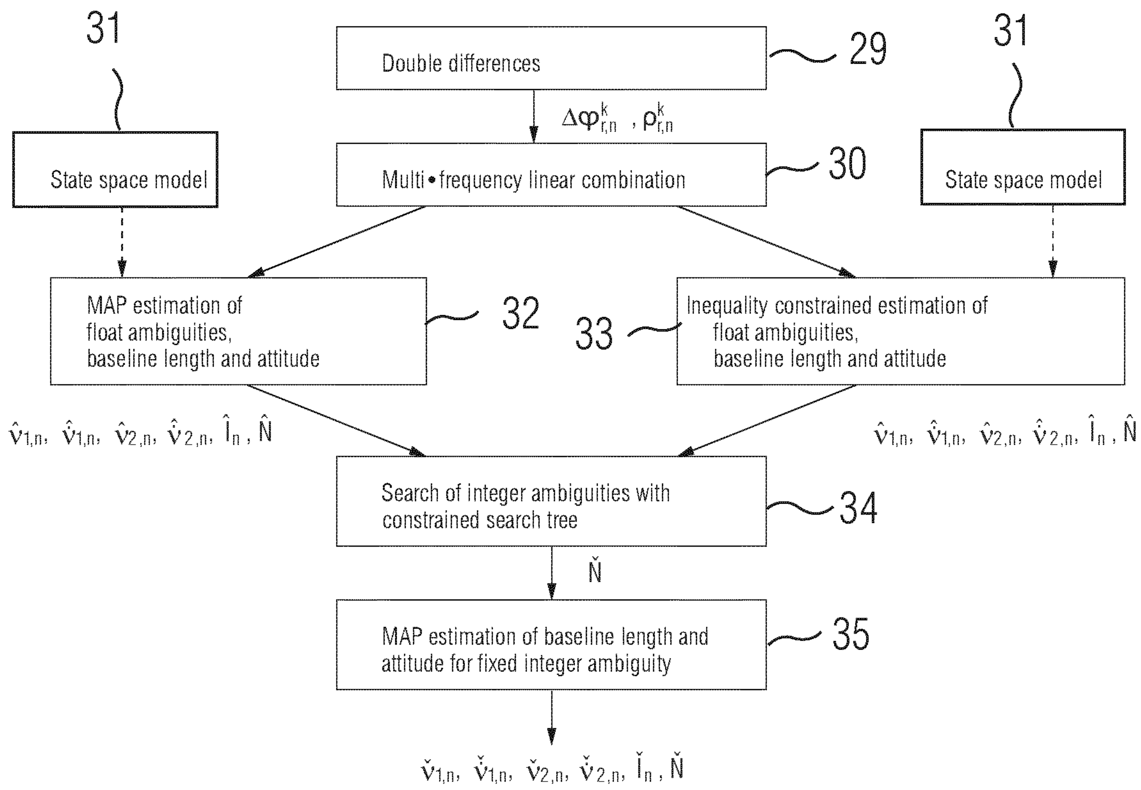
31
Double differences
29
31
$\Delta\varphi^k_{r,n}$ , $\rho^k_{r,n}$
State space model
Multi•frequency linear combination
30
State space model
MAP estimation of
float ambiguities,
baseline length and attitude
32
33
Inequality constrained estimation of
float ambiguities,
baseline length and attitude
$\hat{v}_{1,n}$, $\hat{\dot{v}}_{1,n}$, $\hat{v}_{2,n}$, $\hat{\dot{v}}_{2,n}$, $\hat{l}_n$ , $\hat{N}$
$\hat{v}_{1,n}$, $\hat{\dot{v}}_{1,n}$, $\hat{v}_{2,n}$, $\hat{\dot{v}}_{2,n}$, $\hat{l}_n$ , $\hat{N}$
Search of integer ambiguities with
constrained search tree
34
$\check{N}$
MAP estimation of baseline length and
attitude for fixed integer ambiguity
35
$\check{v}_{1,n}$, $\check{\dot{v}}_{1,n}$, $\check{v}_{2,n}$, $\check{\dot{v}}_{2,n}$, $\check{l}_n$ , $\check{N}$

FIG 9

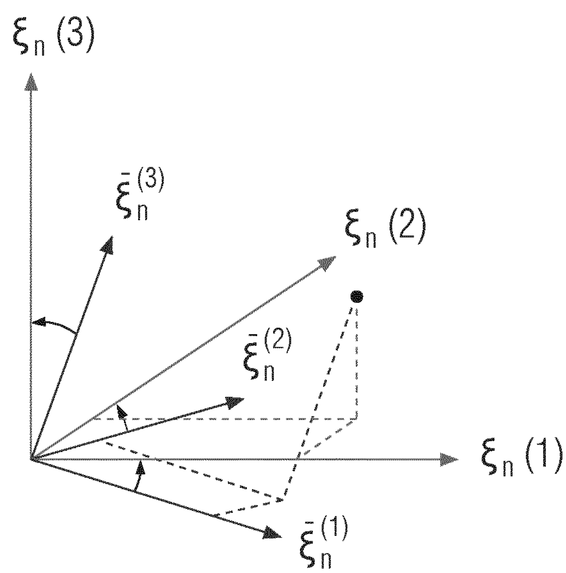
$\xi_n$ (3)
$\bar{\xi}_n^{(3)}$
$\xi_n$ (2)
$\bar{\xi}_n^{(2)}$
$\xi_n$ (1)
$\bar{\xi}_n^{(1)}$

FIG 10

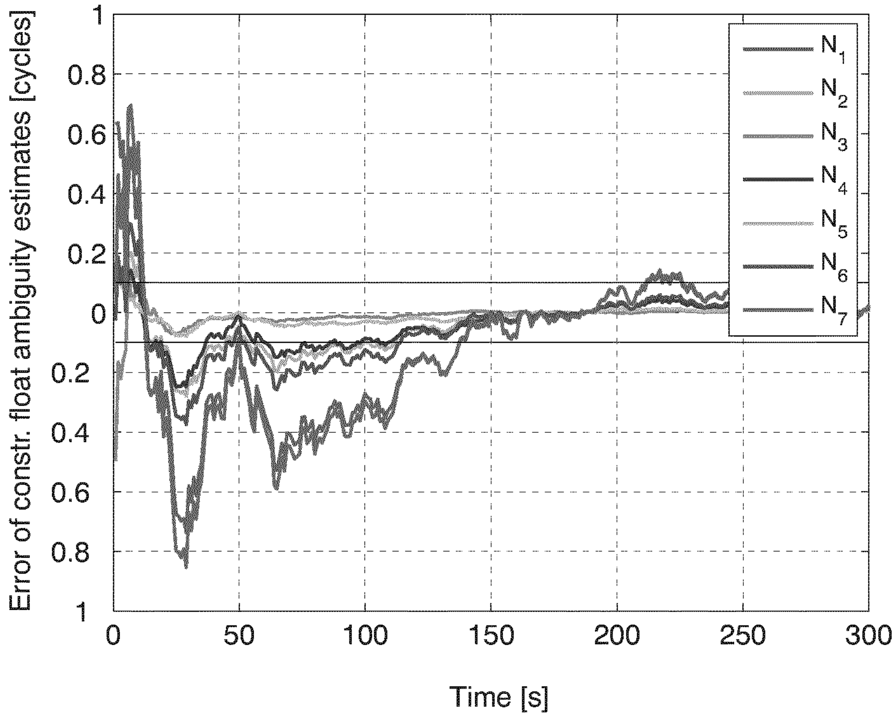
Error of constr. float ambiguity estimates [cycles]
1
0.8
0.6
0.4
0.2
0
0.2
0.4
0.6
0.8
1
0
50
100
150
200
250
300
Time [s]
N1
N2
N3
N4
N5
N6
N7

FIG 11

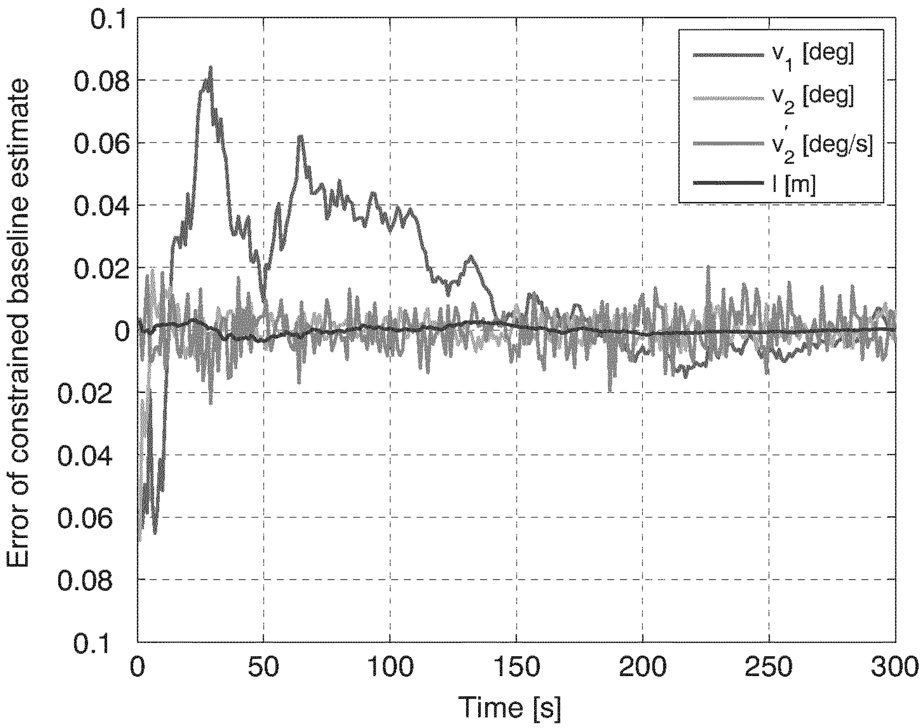
Error of constrained baseline estimate
0.1
0.08
0.06
0.04
0.02
0
0.02
0.04
0.06
0.08
0.1
0
50
100
150
200
250
300
Time [s]
v1 [deg]
v2 [deg]
v2' [deg/s]
l [m]

# FIG 12

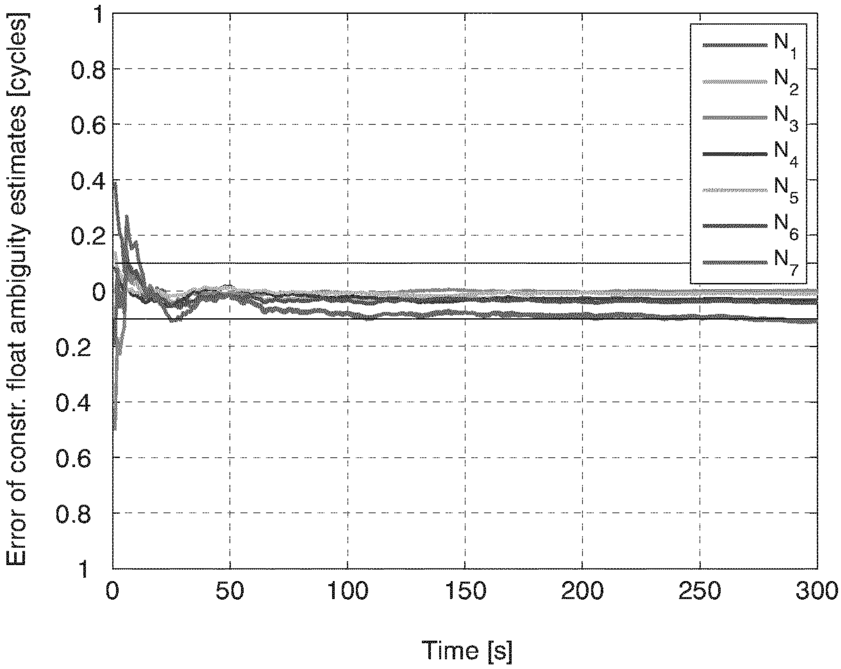
Error of constr. float ambiguity estimates [cycles]
1
0.8
0.6
0.4
0.2
0
0.2
0.4
0.6
0.8
1
0
50
100
150
200
250
300
Time [s]
N1
N2
N3
N4
N5
N6
N7

# FIG 13

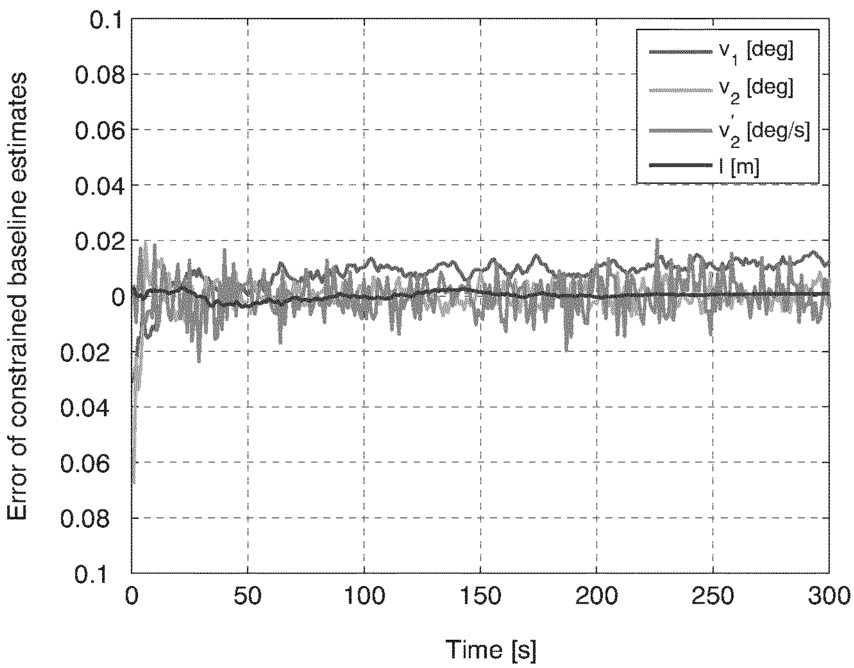
Error of constrained baseline estimates
0.1
0.08
0.06
0.04
0.02
0
0.02
0.04
0.06
0.08
0.1
0
50
100
150
200
250
300
Time [s]
v1 [deg]
v2 [deg]
v'2 [deg/s]
l [m]

FIG 14

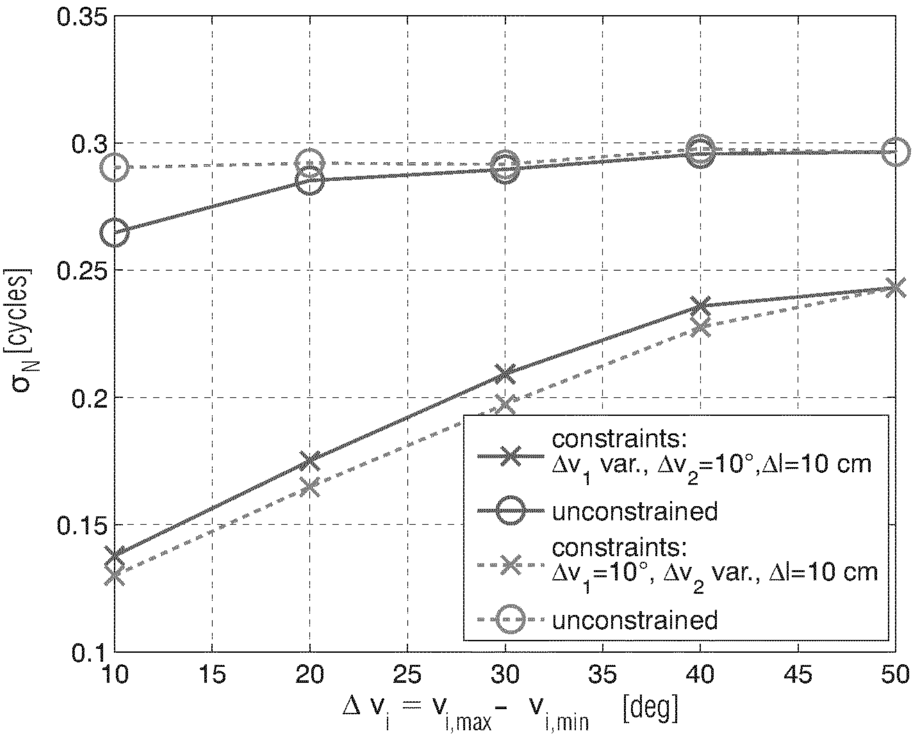
0.35
0.3
0.25
0.2
0.15
0.1
σN [cycles]
10
15
20
25
30
35
40
45
50
Δ vi = vi,max - vi,min [deg]
constraints:
Δv1 var., Δv2=10°,Δl=10 cm
unconstrained
constraints:
Δv1=10°, Δv2 var., Δl=10 cm
unconstrained

FIG 16

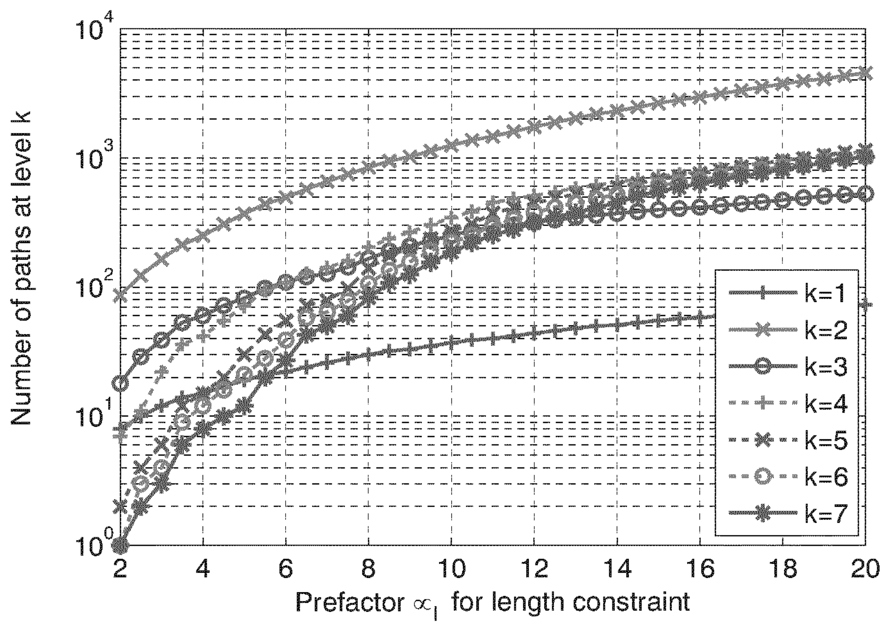
10^4
10^3
10^2
10^1
10^0
Number of paths at level k
2
4
6
8
10
12
14
16
18
20
Prefactor ∝l for length constraint
k=1
k=2
k=3
k=4
k=5
k=6
k=7

FIG 15

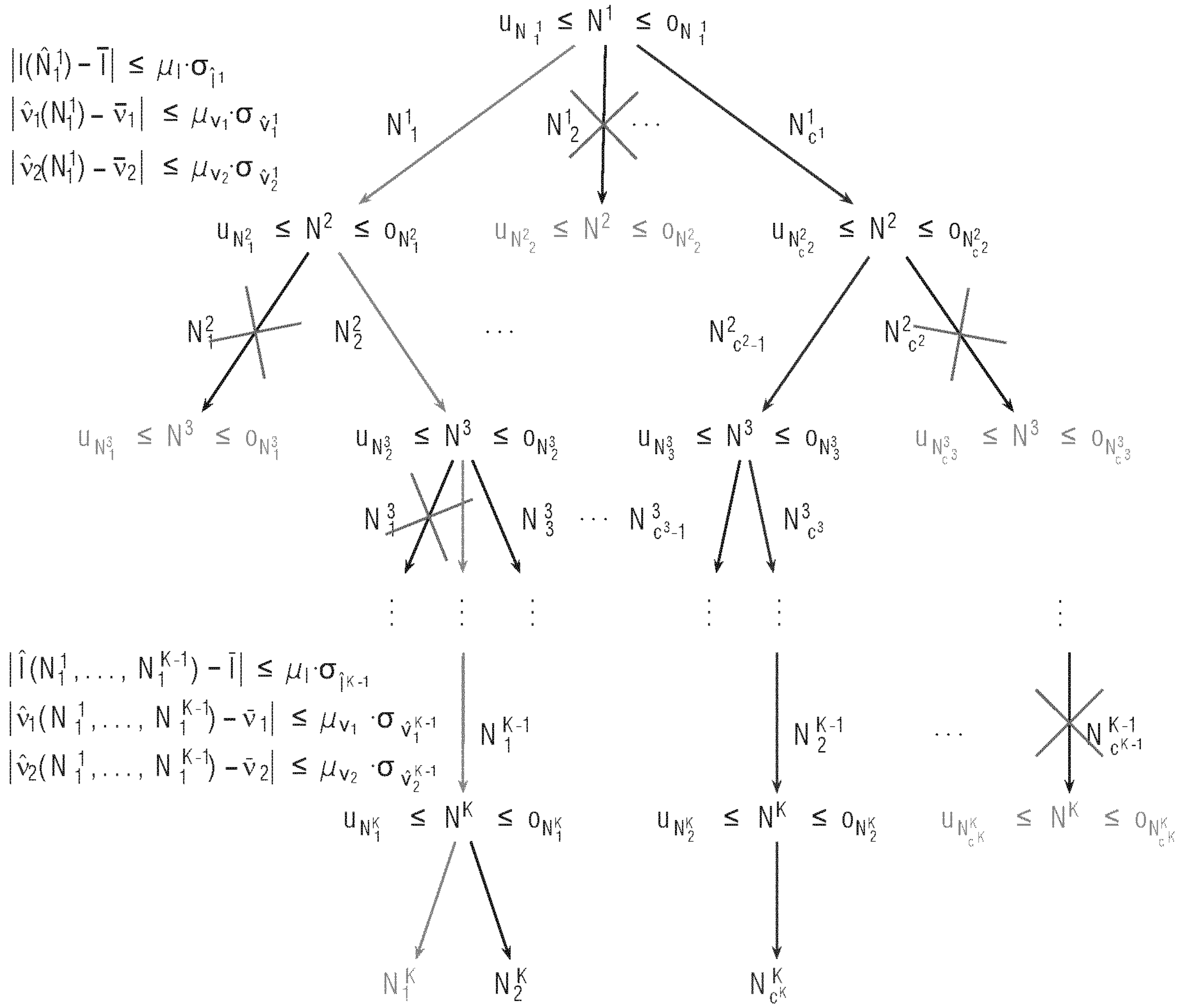
u_{N_1^1} ≤ N^1 ≤ o_{N_1^1}
|I(N̂_1^1) − Ī| ≤ μ_I·σ_{Î^1}
|v̂_1(N_1^1) − v̄_1| ≤ μ_{v1}·σ_{v̂_1^1}
|v̂_2(N_1^1) − v̄_2| ≤ μ_{v2}·σ_{v̂_2^1}
N_1^1
N_2^1
N_{c^1}^1
u_{N_1^2} ≤ N^2 ≤ o_{N_1^2}
u_{N_2^2} ≤ N^2 ≤ o_{N_2^2}
u_{N_{c^2}^2} ≤ N^2 ≤ o_{N_{c^2}^2}
N_1^2
N_2^2
N_{c^2-1}^2
N_{c^2}^2
u_{N_1^3} ≤ N^3 ≤ o_{N_1^3}
u_{N_2^3} ≤ N^3 ≤ o_{N_2^3}
u_{N_3^3} ≤ N^3 ≤ o_{N_3^3}
u_{N_{c^3}^3} ≤ N^3 ≤ o_{N_{c^3}^3}
N_1^3
N_3^3
N_{c^3-1}^3
N_{c^3}^3
|Î(N_1^1, . . . , N_1^{K-1}) − Ī| ≤ μ_I·σ_{Î^{K-1}}
|v̂_1(N_1^1, . . . , N_1^{K-1}) − v̄_1| ≤ μ_{v1}·σ_{v̂_1^{K-1}}
|v̂_2(N_1^1, . . . , N_1^{K-1}) − v̄_2| ≤ μ_{v2}·σ_{v̂_2^{K-1}}
N_1^{K-1}
N_2^{K-1}
N_{c^{K-1}}^{K-1}
u_{N_1^K} ≤ N^K ≤ o_{N_1^K}
u_{N_2^K} ≤ N^K ≤ o_{N_2^K}
u_{N_{c^K}^K} ≤ N^K ≤ o_{N_{c^K}^K}
N_1^K
N_2^K
N_{c^K}^K

FIG 17

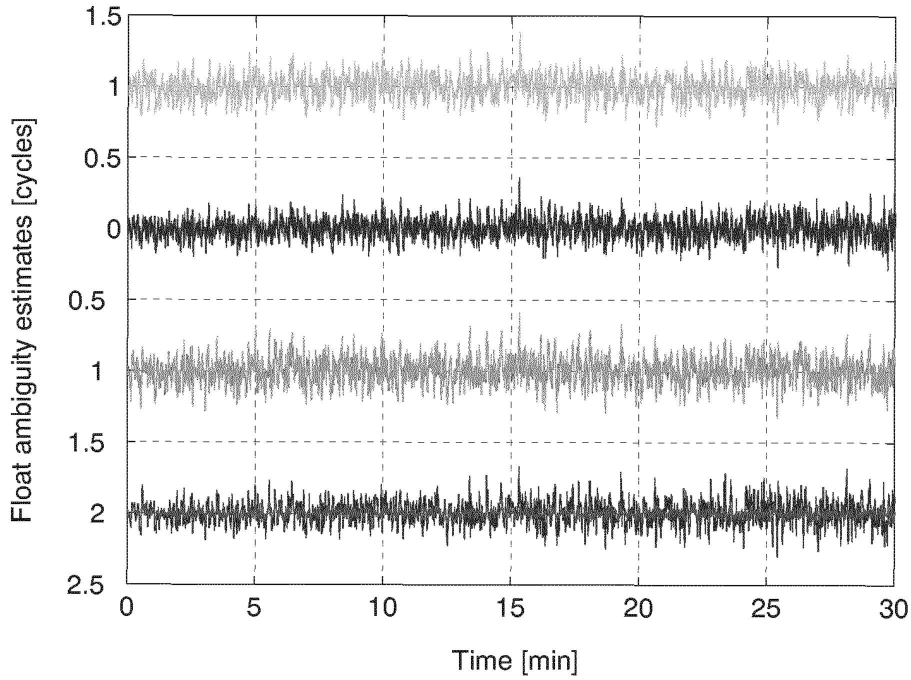
1.5
1
0.5
0
0.5
1
1.5
2
2.5
Float ambiguity estimates [cycles]
0
5
10
15
20
25
30
Time [min]

FIG 18

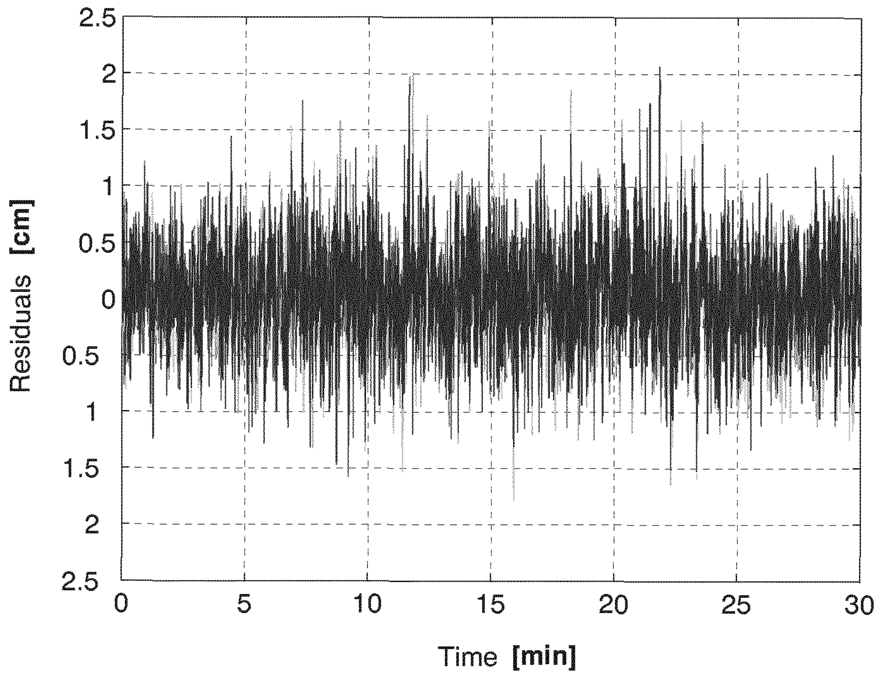
2.5
2
1.5
1
0.5
0
0.5
1
1.5
2
2.5
Residuals [cm]
0
5
10
15
20
25
30
Time [min]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20040225438 A1


### Non-patent literature cited in the description


- **P. TEUNISSEN.** The least-squares ambiguity decorrelation adjustment: a method for fast GPS ambiguity estimation. *J. of Geodesy,* 1995, vol. 70, 65-82
- **R. MÖNIKES ; J. WENDEL ; G. TROMMER.** A modified LAMBDA method for ambiguity resolution in the presence of position domain constraints. *Proc. of ION GPS,* 2005, 81-87
- **P. TEUNISSEN.** The LAMBDA method for the GNSS compass. *Art. Satellites,* 2006, vol. 41 (3), 89-103
- **P. TEUNISSEN.** Integer least-squares theory for the GNSS compass. *J. of Geodesy,* 2010, vol. 84, 433-447
- **P. HENKEL ; C. GÜNTHER.** Joint L-/C-Band Code and Carrier Phase Linear Combinations for Galileo. *Int. J. ofNav. and Obs.,* 2008, 8
- **P. HENKEL.** Bootstrapping with Multi-Frequency Mixed Code Carrier Linear Combinations and Partial Integer Decorrelation in the Presence of Biases. *Proc. of Int. Assoc. of Geod. Scient. Ass.,* 2009
- **P. HENKEL ; C. GÜNTHER.** Reliable Carrier Phase Positioning with Multi-Frequency Code Carrier Linear Combinations. *Proc. of 23rd ION Intern. Techn. Meet. (ION-GNSS),* 2010
- Baseline constrained ambiguity resolution with multiple frequencies. **P. JURKOWSKI.** Bachelor thesis. Technische Universität München, 2010, 49